# EUROPEAN PATENT APPLICATION

(11) **EP 4 576 300 A1**
(43) Date of publication of application: **25.06.2025**
(21) Application number: 24212007.9
(22) Date of filing: 11.11.2024
(51) Int. Cl.: H01M 10/0525, H01M 10/0565, H01M 10/0568, H01M 10/052, H01M 10/0567, H01M 10/0569, H01M 4/525

(54) **LITHIUM BATTERY**

(30) Priority: 22.12.2023 KR 20230190351
(71) Applicant: Samsung SDI Co., Ltd., Yongin-si, Gyeonggi-do 17084 (KR); IUCF-HYU (Industry-University Cooperation Foundation Hanyang University), Seoul (KR)
(72) Inventor: Bae, Woojin, 17084 Gyeonggi-do (KR); Lee, Kanghee, 17084 Gyeonggi-do (KR); Moon, Jongseok, 17084 Gyeonggi-do (KR); Kim, Heemin, 17084 Gyeonggi-do (KR); Park, Jongseok, 17084 Gyeonggi-do (KR); Woo, Hyunsik, 17084 Gyeonggi-do (KR); Shin, Juhun, 17084 Gyeonggi-do (KR); Hong, Donggi, 17084 Gyeonggi-do (KR); Pyo, Sujin, 17084 Gyeonggi-do (KR); Kim, Dongwon, 06219 Seoul (KR); Ban, Ahyeon, 05112 Seoul (KR); Roh, Jinah, 03951 Seoul (KR); Choi, Jaekyung, 03093 Seoul (KR)
(74) Representative: Michalski Hüttermann & Partner Patentanwälte mbB

(57) **Abstract**

A lithium battery including a cathode, an anode current collector, and an electrolyte layer disposed between the cathode and the anode current collector is provided. The electrolyte layer includes a gel polymer electrolyte, wherein the gel polymer electrolyte includes a first polymer, a first lithium salt, a second lithium salt, a first organic solvent, and a second organic solvent, the first polymer includes a repeating unit derived from a first crosslinking monomer including three or more reactive functional groups, and the first lithium salt and the second lithium salt each independently include a borate-based lithium salt.

## Description

### CROSS-REFERENCE TO RELATED APPLICATION

This application claims priority to and the benefit of Korean Patent Application No. 10-2023-0190351, filed on December 22, 2023, in the Korean Intellectual Property Office, the entire content of which is incorporated herein by reference.

### BACKGROUND

### 1. Field

One or more embodiments relate to a lithium battery.

### 2. Description of the Related Art

Currently comparable lithium batteries mainly use carbon-based anode active materials such as graphite. There should be no or substantially no change in volume of carbon-based anode active materials during charging or discharging, which ensures the high stability of lithium batteries. Graphite has a theoretical electric capacity of about 372 milliampere per gram (mAh/g).

Lithium metal may also (in the alternative to carbon-based material) be used as an anode active material. Lithium metal has a theoretical electrical capacity of about 3,860 mAh/g. Due to side reactions between lithium metal and electrolytes during charging or discharging, the lifespan characteristics of lithium batteries may deteriorate.

In a lithium battery, an anode active material layer is arranged between an electrolyte and an anode current collector. During the assembly of lithium batteries, anode active material layers may not be provided, which may improve the energy density of the lithium batteries.

### SUMMARY

One or more aspects are directed toward an anode-free lithium battery wherein an anode active material layer may not be provided (e.g., the battery being free off the anode active material layer) during the assembly of the lithium battery. Here, because the anode active material layer may not be provided from the lithium battery, the energy density of the lithium battery may thereby be improved.

One or more aspects are directed toward an anode-free lithium battery wherein during the assembly of the anode-free lithium battery, a lithium metal layer may be precipitated between an electrolyte and an anode current collector, and the precipitated lithium metal layer may be dissolved. As charging or discharging of a lithium battery is repeated, a lithium metal layer may include impurities remaining in an electrode and decomposition products of an electrolyte due to side reactions with the electrolyte. A surface of a lithium-containing metal layer including such impurities may become rough and/or hard and lithium dendrites may be precipitated on a lithium-containing metal layer which has the rough and/or hard surface. Lithium dendrites may continue to grow during charging or discharging, which may cause a short circuit between a cathode and an anode of the battery. In one or more embodiments, a lithium battery may deteriorate. In one or more embodiments, there is a need to prevent or reduce side reactions between an electrolyte and a lithium metal layer during a charging or discharging process of a lithium battery and to suppress or reduce the growth of lithium dendrites from the lithium metal layer.

One or more aspects of the present disclosure include a lithium battery in which a novel (e.g., new) gel polymer electrolyte with excellent or suitable ionic conductivity is provided to suppress or reduce a change in volume of a lithium battery during charging or discharging and improve cycle characteristics.

Additional aspects will be set forth in part in the description which follows and, in part, will be apparent from the description, or may be learned by practice of the presented embodiments of the present disclosure.

According to one or more embodiments, a lithium battery includes a cathode, an anode current collector, and an electrolyte layer arranged between the cathode and the anode current collector, wherein the electrolyte layer includes a gel polymer electrolyte, wherein the gel polymer electrolyte includes a first polymer, a first lithium salt, a second lithium salt, a first organic solvent, and a second organic solvent, the first polymer includes a repeating unit derived from a first crosslinking monomer including three or more reactive functional groups, and the first lithium salt and the second lithium salt each independently include a borate-based lithium salt.

### BRIEF DESCRIPTION OF THE DRAWINGS

The preceding and other aspects, features, and advantages of certain embodiments of the present disclosure will be more apparent from the following description taken in conjunction with the accompanying drawings, in which:
FIG. 1 is a schematic cross-sectional view of a lithium battery according to one or more embodiments;
FIG. 2 is a schematic cross-sectional view of a lithium battery according to one or more embodiments;
FIG. 3A is a scanning electron microscope image of a surface of a lithium metal layer formed after a 1^{st} cycle of charging, in a lithium battery of Example 3;
FIG. 3B is a scanning electron microscope image of a cross section of the lithium metal layer formed after the 1^{st} cycle of charging, in the lithium battery of Example 3;
FIG. 4A is a scanning electron microscope image of a surface of a lithium metal layer formed after a 1^{st} cycle of charging, in a lithium battery of Comparative Example 1;
FIG. 4B is a scanning electron microscope image of a cross section of the lithium metal layer formed after the 1^{st} cycle of charging, in the lithium battery of Comparative Example 1.
FIG. 5A is a scanning electron microscope image of a surface of a lithium metal layer formed after a 60^{th} cycle of charging, in the lithium battery of Example 3;
FIG. 5B is a scanning electron microscope image of a cross section of the lithium metal layer formed after the 60^{th} cycle of charging, in the lithium battery of Example 3;
FIG. 6A is the scanning electron microscope image of a surface of a lithium metal layer formed after a 60^{th} cycle of charging, in the lithium battery of Comparative Example 1.
FIG. 6B is a scanning electron microscope image of a cross section of the lithium metal layer formed after the 60^{th} cycle of charging, in the lithium battery of Comparative Example 1;
FIG. 7 shows an X-ray photoelectron spectroscopy (XPS) spectrum of a surface of a lithium metal layer after a 20^{th} cycle of charging, in the lithium battery manufactured in Example 3;
FIG. 8 shows an XPS spectrum of a surface of a lithium metal layer after a 20^{th} cycle of charging, in the lithium battery manufactured in Comparative Example 1;
FIG. 9 shows infrared spectra for a gel polymer electrolyte of Example 3 and a liquid electrolyte of Comparative Example 1;
FIG. 10 shows Raman spectra for the gel polymer electrolyte of Example 3 and the liquid electrolyte of Comparative Example 1;
FIG. 11 is a schematic view of a lithium battery according to one or more embodiments;
FIG. 12 is a schematic view of a lithium battery according to one or more embodiments;
FIG. 13 is a schematic view of a lithium battery according to one or more embodiments; and
FIG. 14 is a schematic view of a lithium battery according to one or more embodiments.

### DETAILED DESCRIPTION

Reference will now be made in more detail to one or more embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. In one or more embodiments, one or more embodiments are merely described in more detail, by referring to the drawings, to explain aspects of the present description. As used herein, the term "and/or" includes any and all combination(s) of one or more of the associated listed items. Expressions such as "at least one of," if preceding a list of elements, modify the entire list of elements and do not modify the individual elements of the list.

Unless otherwise defined, all terms (including technical and scientific terms) used in the present disclosure have the same meaning as commonly understood by one of ordinary skill in the art to which the present disclosure belongs. In one or more embodiments, it will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Embodiments are described in the present disclosure with reference to cross-sectional views which are schematic diagrams of idealized embodiments. As such, variations from the shapes of the illustrations as a result, for example, of manufacturing techniques and/or tolerances, are to be expected. In one or more embodiments, one or more embodiments described in the present disclosure should not be construed as limited to the particular shapes regions of illustrated in the present disclosure but may include deviations in shapes that result, for example, from manufacturing. For example, regions illustrated or described as being flat may be typically rough and/or have nonlinear features. Moreover, sharp-drawn angles may be round. In one or more embodiments, regions illustrated in the drawings are schematic in nature and their shapes are not intended to illustrate the actual shape of a region and are not intended to limit the scope of the claims.

The present disclosure may, however, be embodied in different forms and should not be construed as limited to one or more embodiments described in the present disclosure. These embodiments are provided so that the present disclosure will be thorough and complete, and will fully convey the scope of the present disclosure to those skilled in the art. Like reference numerals designate like elements.

When it is described that an element is "on" another element, it will be understood that the element may be arranged directly on another element or still another element may be interposed therebetween. In contrast, if (e.g., when) it is described that an element is "directly on" another element, still another element is not interposed therebetween.

It will be understood that, although the terms "first," "second," and "third" may be used herein to describe one or more suitable elements, components, regions, layers, and/or sections, these elements, components, regions, layers, and/or sections should not be limited by these terms. These terms are only used to distinguish one element, component, region, layer, or section from another region, layer, or section. In one or more embodiments, a first element, component, region, layer, or section described in more detail may be termed a second element, component, region, layer, or section without departing from the teachings of the present specification.

The term used herein is intended to describe only a specific embodiment and is not intended to limit the present disclosure. As used herein, the singular forms "a," "an," and "the" are intended to include the plural forms, including "at least one," unless the content (e.g., amount) clearly indicates otherwise. "At least one" should not be construed as being limited to the singular. As used herein, the term "and/or" includes any and all combination(s) of one or more of the associated listed items. The terms "includes," "including," "includes," and/or "including," if (e.g., when) used in the detailed description, specify a presence of stated features, regions, integers, steps, operations, elements, and/or components, but do not preclude the presence or addition of one or more other features, regions, integers, steps, operations, elements, components, and/or groups thereof.

Spatially relative terms such as "beneath," "below," "lower," "above," and "upper" may be used herein to easily describe one element or aspect's relationship to another element or aspect. It will be understood that the spatially relative terms are intended to encompass different orientations of a device in use or operation in addition to the orientation illustrated in the drawings. For example, if (e.g., when) a device in the drawings is turned over, elements described as "below" or "beneath" other elements or features would then be "above" or "over" the other elements or features. In one or more embodiments, the example term "below" may encompass both (e.g., simultaneously) orientations of above and below. The device may be otherwise oriented (rotated 90 degrees or at other orientations), and the spatially relative terms used herein may be interpreted accordingly.

"Group" refers to a group of the periodic table of elements according to the International Union of Pure and Applied Chemistry ("IUPAC") Groups 1-18 group classification system.

In the present disclosure, the term "particle diameter" refers to an average diameter if (e.g., when) particles are spherical and refers to an average major axis length if (e.g., when) particles are non-spherical. A particle diameter may be measured by using a particle size analyzer (PSA). A "particle diameter" is, for example, an average particle diameter. An "average particle diameter" refers to, for example, a median particle diameter (D50).

D50 refers to a particle size corresponding to a 50 % cumulative volume if a particle size distribution measured through a laser diffraction method is calculated from particles having a smaller particle size.

D90 refers to a particle size corresponding to a 90 % cumulative volume if a particle size distribution measured through a laser diffraction method is calculated from particles having a smaller particle size.

D10 refers to a particle size corresponding to a 10 % cumulative volume if a particle size distribution measured through a laser diffraction method is calculated from particles having a smaller particle size.

The term "metal" as used herein includes all of metals and metalloids such as silicon and germanium in an elemental or ionic state.

The term "alloy" as used herein refers to a mixture of two or more metals.

The term "electrode active material" as used herein refers to an electrode material that may undergo lithiation and delithiation.

The term "cathode active material" as used herein refers to a cathode material that may undergo lithiation and delithiation.

The term "anode active material" as used herein refers to an anode material that may undergo lithiation and delithiation.

The terms "lithiate" and "lithiating" as used herein refer to a process of adding lithium to an electrode active material.

The terms "delithiate" and "delithiating" as used herein refer to a process of removing lithium from an electrode active material.

The terms "charge" and "charging" as used herein refer to a process of providing electrochemical energy to a battery.

The terms "discharge" and "discharging" as used herein refer to a process of removing electrochemical energy from a battery.

The terms "positive electrode" and "cathode" as used herein refer to an electrode at which electrochemical reduction and lithiation occur during a discharging process.

The terms "negative electrode" and "anode" as used herein refer to an electrode at which electrochemical oxidation and delithiation occur during a discharging process.

While specific embodiments have been described, alternatives, modifications, variations, improvements, and substantial equivalents that are or may be presently unforeseen may arise to applicants or others skilled in the art. In one or more embodiments, the appended claims as filed and as they may be amended are intended to embrace all such alternatives, modifications, variations, improvements, and substantial equivalents.

Hereinafter, a lithium battery according to one or more embodiments will be described in more detail.

### Lithium battery

A lithium battery according to one or more embodiments may include a cathode, an anode current collector, and an electrolyte layer arranged between the cathode and the anode current collector. The electrolyte layer may include a gel polymer electrolyte. The gel polymer electrolyte may include a first polymer, a first lithium salt, a second lithium salt, a first organic solvent, and a second organic solvent. The first polymer may include a repeating unit derived from a first crosslinking monomer including at least three (e.g., three or more) reactive functional groups. The first lithium salt and the second lithium salt may each independently include a borate-based lithium salt.

The gel polymer electrolyte may have excellent or suitable ionic conductivity and improved mechanical properties as compared with a liquid electrolyte, thereby more effectively suppressing or reducing a change in volume of the lithium battery during charging or discharging.

The gel polymer electrolyte may suppress or reduce side reactions with a lithium metal layer during charging or discharging of the lithium battery, thereby effectively preventing or reducing the deterioration of the lithium battery. For example, during charging or discharging of the lithium battery, a solid electrolyte interphase (SEI) layer may be formed between a novel (e.g., new) gel polymer electrolyte and a precipitated lithium metal layer. A composition of the SEI layer may be modified to have an increased content (e.g., amount) of a decomposition product(s) of a lithium salt so that side reactions between the gel polymer electrolyte and the lithium metal layer may be more effectively suppressed or reduced. In one or more embodiments, the gel polymer electrolyte and/or the modified SEI layer may more effectively suppress or reduce lithium dendrites from growing from the lithium metal layer, thereby effectively preventing or reducing an internal short circuit in the lithium battery.

The gel polymer electrolyte may include the first lithium salt and the second lithium salt so that an ester group of the first polymer may interact with lithium ions to more effectively change a solvation structure of lithium ions. The aggregation of anions derived from the first lithium salt and the second lithium salt may increase, and inorganic components such as fluorine (F) derived from anions aggregated (e.g., agglomerated) during a charging or discharging process may modify the composition of the SEI layer, thereby improving the cycle characteristics of the lithium battery.

The gel polymer electrolyte may include the first organic solvent and the second organic solvent so that a carbonyl group of an organic solvent may interact with lithium ions to more effectively change a solvation structure of lithium ions. The aggregation of anions derived from the first lithium salt and the second lithium salt may increase, and inorganic components such as fluorine (F) derived from anions aggregated (e.g., agglomerated) during a charging or discharging process may modify the composition of the SEI layer, thereby improving the cycle characteristics of the lithium battery.

In one or more embodiments, the cycle characteristics of the lithium battery including the gel polymer electrolyte may be improved.

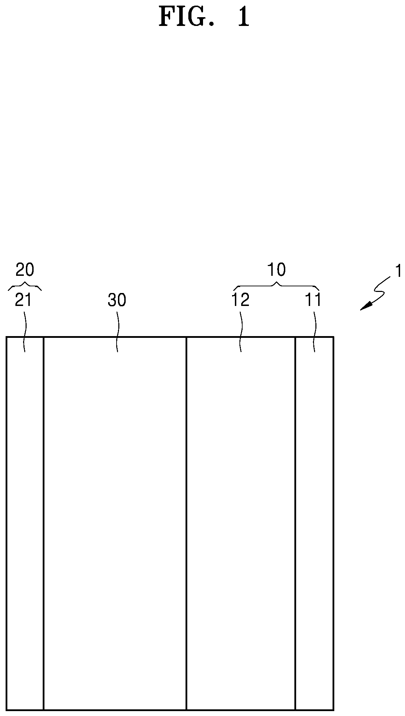

FIG. 1 is a cross-sectional schematic view of a lithium battery 1 according to one or more embodiments.

Referring to FIG. 1, the lithium metal battery 1 may include a cathode 10, an anode current collector 21, and an electrolyte layer 30 arranged between the cathode 10 and the anode current collector 21. The electrolyte layer 30 may include a gel polymer electrolyte. The gel polymer electrolyte may include a first polymer, a first lithium salt, a second lithium salt, a first organic solvent, and a second organic solvent. The first polymer may include a repeating unit derived from a first crosslinking monomer including at least three (e.g., three or more) reactive functional groups. The first lithium salt and the second lithium salt may each independently include a borate-based lithium salt.

### Electrolyte layer

The electrolyte layer 30 may include the gel polymer electrolyte. The gel polymer electrolyte may include the first polymer, the first lithium salt, the second lithium salt, the first organic solvent, and the second organic solvent.

The gel polymer electrolyte may include the first polymer to form a gel. An electrolyte not including the first polymer may be a liquid electrolyte.

The first polymer may include, for example, a repeating unit derived from a first crosslinking monomer including three or more, four or more, five or more, or six or more reactive functional groups. The first crosslinking monomer may include, for example, 3 to 20, 3 to 10, 3 to 8, or 4 to 6 reactive functional groups. The first crosslinking monomer may include, for example, 3 to 20, 4 to 15, 5 to 10, or 6 to 10 reactive functional groups. The first crosslinking monomer may include the reactive functional group in such ranges, and thus the gel polymer electrolyte including the first polymer obtained therefrom may provide excellent or suitable mechanical properties and ionic conductivity. If (e.g., when) the gel polymer electrolyte includes a first crosslinking monomer with an excessively (or substantially) small number of reactive functional groups, the mechanical properties of the gel polymer electrolyte may be excessively (or substantially) reduced. If (e.g., when) the gel polymer electrolyte includes a first crosslinking monomer with an excessively (or substantially) large number of reactive functional groups, a crosslinking density may be excessively (or substantially) increased, and thus the ionic conductivity of a gel polymer may be excessively (or substantially) reduced.

The first crosslinking monomer may include an ester group. The first crosslinking monomer may be a monomer including an ester group. The first crosslinking monomer may include the ester group, and thus the oxidation resistance of the gel polymer electrolyte may be further improved. In one or more embodiments, the gel polymer electrolyte may be oxidized in a region adjacent to the cathode 10 having a high voltage, which may more effectively suppress or reduce side reactions between the gel polymer electrolyte and the cathode 10 and/or side reactions between the gel polymer electrolyte and a solvent. In one or more embodiments, the deterioration of the gel polymer electrolyte at an interface between the gel polymer electrolyte and the cathode 10 may be more effectively prevented or reduced.

The first crosslinking monomer may include, for example, an acrylic monomer including a plurality of acrylic groups, a methacrylic monomer including a plurality of methacrylic groups, and/or a (e.g., any suitable) combination thereof.

The acrylic monomer may include, for example, trimethylolpropane triacrylate, trimethylolpropane trimethacrylate, trimethylolpropane ethoxylate triacrylate, trimethylolpropane propoxylate triacrylate, ditrimethylolpropane tetraacrylate, pentaerythritol triacrylate (PETA), pentaerythritol tetraacrylate (PETTA), pentaerythritol ethoxylate tetraacrylate, dipentaerythritol pentaacrylate, dipentaerythritol hexaacrylate, and/or a (e.g., any suitable)combination thereof.

The first crosslinking monomer may not include (e.g., may exclude), for example, a glycol-based monomer. The first crosslinking monomer may be, for example, a monomer free of (e.g., excluding), an alkylene oxide repeating unit. The alkylene oxide repeating unit may be, for example, an ethylene oxide repeating unit. Oxidation resistance may be further improved because the first crosslinking monomer does not include an alkylene oxide repeating unit. In one or more embodiments, the gel polymer electrolyte may not be easily oxidized at high voltage because the gel polymer electrolyte does not include a repeating unit derived from a glycol-based monomer. The deterioration of the gel polymer electrolyte may be more effectively suppressed or reduced at the interface between the gel polymer electrolyte and the cathode 10.

An acrylic monomer that does not include (e.g., excludes) an alkylene oxide repeating unit may include for example, trimethylolpropane triacrylate, trimethylolpropane trimethacrylate, trimethylolpropane propoxylate triacrylate, ditrimethylolpropane tetraacrylate, PETA, PETTA, dipentaerythritol pentaacrylate, dipentaerythritol hexaacrylate, and/or a (e.g., any suitable) combination thereof.

The first polymer may be a crosslinked product of the first crosslinking monomer.

A molecular weight of the first polymer may be, for example, at least 1,000 Dalton (e.g., 1,000 Dalton or more), 10,000 Dalton or more, or 100,000 Dalton or more. The molecular weight of the first polymer may be, for example, in a range of about 1,000 Dalton to about 5,000,000 Dalton, about 10,000 Dalton to about 2,000,000 Dalton, or about 100,000 Dalton to about 1,000,000 Dalton. The first polymer may have a two-dimensional and/or three-dimensional network structure in the gel polymer electrolyte. The molecular weight of the polymer may be measured by, for example, gel permeation chromatography (GPC) utilizing a polystyrene standard sample. The molecular weight of the polymer may be a weight average molecular weight of the polymer.

A content (e.g., amount) of the first polymer may be, for example, in a range of about 0.1 wt% to about 10 wt%, about 0.2 wt% to about 8 wt%, about 0.5 wt% to about 6 wt%, about 1 wt% to about 5 wt%, or about 2 wt% to about 4 wt% with respect to the total weight of the gel polymer electrolyte. The gel polymer electrolyte may include the first polymer in such a range, and thus a stable gel polymer electrolyte may be formed. If (e.g., when) the content (e.g., amount) of the first polymer is excessively (or substantially) low, it may be difficult to form a gel. If (e.g., when) the content (e.g., amount) of the first polymer is excessively (or substantially) high, the gel polymer electrolyte may be excessively (or substantially) cured, which may cause cracks and/or the like in the gel polymer electrolyte during a charging or discharging process and may make it difficult to effectively accommodate a change in volume that occurs during a charging or discharging process of the lithium battery 1. For example, during shrinkage of the lithium battery 1, separation may occur between the gel polymer electrolyte and the cathode 10 and/or between the gel polymer electrolyte and an anode, resulting in a rapid increase in internal resistance.

The gel polymer electrolyte may include the first lithium salt and the second lithium salt. The gel polymer electrolyte may include the first lithium salt and the second lithium salt, and thus the ionic conductivity of the gel polymer electrolyte may be improved.

The first lithium salt and the second lithium salt may each be a borate-based lithium salt. The borate-based lithium salt may have improved high-temperature stability as compared with a phosphorous-based lithium salt and may suppress or reduce the generation of hydrofluoric acid (HF). The first lithium salt and the second lithium salt may each include the borate-based lithium salt, and thus the high-temperature cycle characteristics of the lithium battery 1 may be improved.

For example, the first lithium salt and the second lithium salt may each independently be a fluorine-containing borate-based lithium salt. The first lithium salt and the second lithium salt may each include the fluorine-containing borate-based lithium salt, and thus a composition of an SEI layer formed during charging or discharging of the lithium battery 1 may be more effectively modified. For example, if (e.g., when) a fluorine (F) content (e.g., amount) of the SEI layer increases, the structural stability of the SEI layer may increase, and side reactions with an organic solvent may be effectively suppressed or reduced. In one or more embodiments, the reversibility of an electrode reaction of the lithium battery 1 may be improved.

The first lithium salt and the second lithium salt may be, for example, a noncyclic borate lithium salt and a cyclic borate lithium salt. The first lithium salt may be the acyclic lithium salt, and thus the ionic conductivity of the gel polymer electrolyte may be more effectively increased. The second lithium salt may be the cyclic lithium salt, the aggregation of anions may increase, which may more effectively participate in modifying the composition of the SEI layer and may improve the high-temperature stability of the gel polymer electrolyte.

If (e.g., when) the gel polymer electrolyte does not include the first lithium salt, the ionic conductivity of the gel polymer electrolyte may be reduced. If (e.g., when) the gel polymer electrolyte does not include the second lithium salt, the structural stability of the SEI layer may be reduced.

The fluorine-containing borate-based lithium salt may include, for example, at least one selected from among LiBF₄, LiBF₃(C₂F₅), a compound selected from among compounds represented by Formula 1 to Formula 12, and/or a (e.g., any suitable) combination thereof.

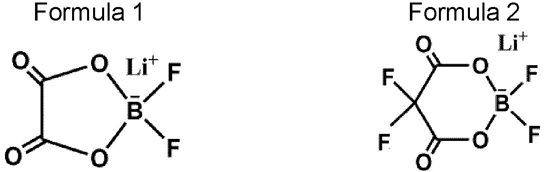

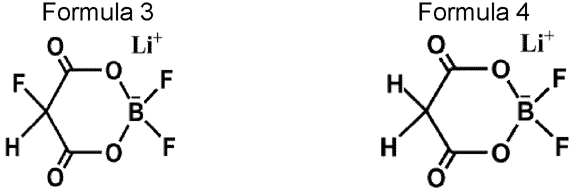

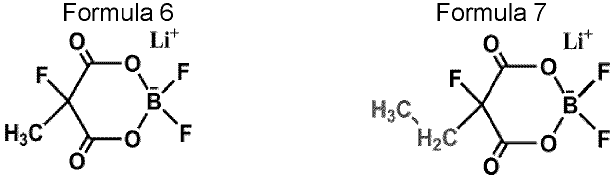

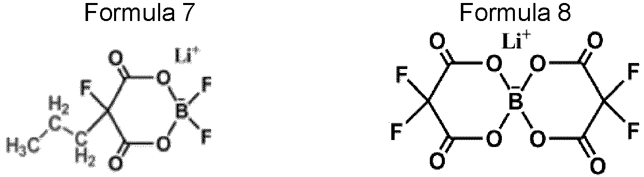

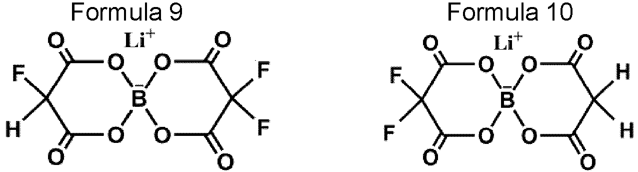

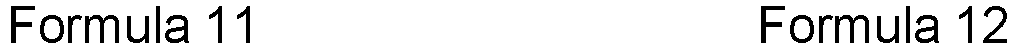

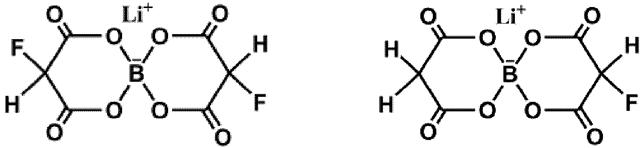

For example, the first lithium salt may include LiBF₄, and the second lithium salt may include the compound selected from among the compounds represented by Formula 1 to Formula 12.

The first lithium salt may include LiBF₄, and the second lithium salt may include, for example, the compound of Formula 1.

The gel polymer electrolyte may not include (e.g., may exclude), for example, a phosphorous-based lithium salt. The gel polymer electrolyte may not include (e.g., may exclude), the phosphorous-based lithium salt so that the high-temperature stability of the gel polymer electrolyte may be improved and the generation of hydrofluoric acid (HF) may be suppressed or reduced.

The gel polymer electrolyte may not include (e.g., may exclude), for example, LiBOB. The gel polymer electrolyte may not include (e.g., may exclude) the LiBOB so that the ionic conductivity of the gel polymer electrolyte may be further improved and the solubility of a lithium salt with respect to a carbonate solvent may be further improved.

In the gel polymer electrolyte, contents (e.g., amounts) of the first lithium salt and the second lithium salt may each independently be, for example, in a range of more than 0 M to about 1.2 M, about 0.1 M to about 1.0 M, or about 0.4 M to about 0.8 M. The first lithium salt and the second lithium salt may each have a content (e.g., amount) in such ranges so that the gel polymer electrolyte may have excellent or suitable ionic conductivity and also a structurally stable SEI layer may be formed.

The contents (e.g., amounts) of the first lithium salt and the second lithium salt may each independently, for example, be in a range of more than 0 M to about 1.2 M, about 0.1 M to about 1.0 M, or about 0.4 M to about 0.8 M with respect to a precursor composition for forming a gel polymer electrolyte before a first crosslinking monomer and a thermal initiator are added.

A content (e.g., amount) ratio of the first lithium salt to the second lithium salt may be, for example, in a range of about 1:9 to about 9:1, about 3:7 to about 7:3, or about 4:6 to about 6:4. The content (e.g., amount) ratio of the first lithium salt to the second lithium salt may be in such ranges so that the gel polymer electrolyte may have excellent or suitable ionic conductivity and also a structurally stable SEI layer may be formed. The content (e.g., amount) ratio of the first lithium salt to the second lithium salt may be, for example, a molar ratio.

The gel polymer electrolyte may include the first organic solvent and the second organic solvent. The gel polymer electrolyte may include the first organic solvent and the second organic solvent, and thus the interfacial resistance between the gel polymer electrolyte and the cathode 10 and/or the interfacial resistance between the gel polymer electrolyte and a lithium metal layer precipitated during charging may be more effectively reduced. The first organic solvent and the second organic solvent may each include, for example, a carbonate-based compound. The first organic solvent and the second organic solvent may each be, for example, a carbonate-based organic solvent. The gel polymer electrolyte may include a carbonate-based first organic solvent and a carbonate-based second organic solvent so that the first lithium salt and the second lithium salt may be easily dissolved in an organic solvent and the viscosity of the precursor composition for forming a gel electrolyte may be lowered. The first organic solvent may include, for example, a linear carbonate compound. The first organic solvent may include the linear carbonate-based solvent, and thus the viscosity of the precursor composition before crosslinking may be lowered. The precursor composition may be easily handled. The second organic solvent may include, for example, a cyclic carbonate compound substituted with a substituent. A substituent of the cyclic carbonate compound may include, for example, a halogen, a cyano group (CN), a nitro group (NO₂), and/or a (e.g., any suitable) combination thereof. The second organic solvent may include the cyclic carbonate-based solvent substituted with a substituent, and thus the first and second lithium salts may be more easily dissolved in the precursor composition for forming a gel electrolyte and the substituent may be involved in the formation of a SEI layer, which may improve the structural stability of the SEI layer. The first organic solvent may include, for example, diethyl carbonate (DEC), dimethyl carbonate (DMC), ethyl methyl carbonate (EMC), methyl propyl carbonate, ethyl propyl carbonate, dipropyl carbonate, and/or a (e.g., any suitable) combination thereof. The second organic solvent may include, for example, vinylene carbonate substituted with at least one substituent selected from among a halogen, a cyano group (CN), and a nitro group (NO₂); vinylethylene carbonate substituted with at least one substituent selected from among a halogen, a cyano group (CN), and a nitro group (NO₂); fluoroethylene carbonate (FEC); FEC substituted with at least one substituent selected from among a halogen, a cyano group (CN), and a nitro group (NO₂); and/or a (e.g., any suitable) combination thereof. The first organic solvent may include, for example, DEC, and the second organic solvent may include, for example, a fluorine-substituted cyclic carbonate compound. The second organic solvent may include, for example, FEC. For example, the gel polymer electrolyte may not include (e.g., may exclude) an unsubstituted cyclic carbonate-based solvent. The gel polymer electrolyte may not include (e.g., may exclude) an unsubstituted cyclic carbonate solvent, and thus the first lithium salt and the second lithium salt may be more easily dissolved in the precursor composition for forming a gel polymer. A volume ratio of the first organic solvent to the second organic solvent may be, for example, in a range of about 5.5:4.5 to about 9:1, about 6:4 to about 9:1, about 6:4 to about 8:2, or about 6:4 to about 7:3. The volume ratio of the first organic solvent to the second organic solvent may be in such a range, which may provide a composition for forming a gel electrolyte having excellent or suitable lithium salt solubility and low viscosity. A gel polymer electrolyte obtained from the composition for forming a gel electrolyte with excellent or suitable lithium salt solubility and low viscosity may provide excellent or suitable mechanical properties and improved ionic conductivity.

The gel polymer electrolyte may not include (e.g., may exclude), for example, butanediol, thiourea, and/or a (e.g., any suitable) combination thereof. The gel polymer electrolyte may provide certain mechanical strength on the anode current collector 21, and thus a substantially uniform lithium metal layer may be precipitated on the anode current collector 21 without such additives.

The gel polymer electrolyte may be a crosslinked product of the precursor composition for forming a gel polymer electrolyte. The precursor composition for forming a gel polymer electrolyte may include, for example, a first crosslinking monomer including at least three (e.g., three or more) reactive functional groups, a first lithium salt, a second lithium salt, a first organic solvent, and a second organic solvent. The gel polymer electrolyte may be obtained by crosslinking such a precursor composition for forming a gel polymer electrolyte. By crosslinking the first crosslinking monomer, a first polymer including a repeating unit derived from the first crosslinking monomer may be obtained. A content (e.g., amount) of the first crosslinking monomer may be, for example, in a range of about 0.1 wt% to about 10 wt%, about 0.2 wt% to about 8 wt%, about 0.5 wt% to about 6 wt%, about 1 wt% to about 5 wt%, or about 2 wt% to about 4 wt% with respect to (100 wt% of) the total weight of the precursor composition for forming a gel polymer electrolyte. The precursor composition for forming a gel polymer electrolyte may include the first crosslinking monomer in such ranges to form a stable gel polymer electrolyte. If (e.g., when) the content (e.g., amount) of the first crosslinking monomer is excessively (or substantially) low, it may be difficult to form a gel. If (e.g., when) the content (e.g., amount) of the first crosslinking monomer is excessively (or substantially) high, the gel polymer electrolyte may be excessively (or substantially) cured, which may cause cracks and/or the like in the gel polymer electrolyte during a charging or discharging process.

A method of crosslinking the precursor composition for forming a gel polymer electrolyte is not limited, and the precursor composition for forming a gel polymer electrolyte may be crosslinked by, for example, heat, ultraviolet light, and/or the like. From a manufacturing efficiency standpoint, thermal crosslinking may be used. The precursor composition for forming a gel polymer may include, for example, a thermal initiator. The thermal initiator may be, for example, a t-amyl peroxide-based initiator or an azobis-based initiator, and/or the like, but the present disclosure is not limited thereto. Any material may be used as long as the material may be used as a thermal initiator in the art. A content (e.g., amount) of the thermal initiator may be 0.1 wt% or less, or 0.05 wt% or less, of (100 wt% of) the total weight of the precursor composition for forming a gel polymer electrolyte. For example, the crosslinked product of the precursor composition for forming a gel polymer electrolyte may be a result of heat treatment at a temperature of about 60 °C to about 90 °C for about 1 hour to about 3 hours. Heat treatment conditions may be adjusted according to types (kinds) of used thermal initiators.

The ionic conductivity (e.g., conductivity of ions) of the gel polymer electrolyte at a temperature of 25 °C and a pressure of 1 atmosphere (atm) may be, for example, 50 % or more, 60 % or more, 70 % or more, or 80 % or more of the ionic conductivity of the liquid electrolyte excluding the first polymer at a temperature of 25 °C and a pressure of 1 atm. The ionic conductivity of the gel polymer electrolyte at a temperature of 25 °C and a pressure of 1 atm may be, for example, in a range of about 50 % to about 99 %, about 60 % to about 98 %, about 70 % to about 96 %, or about 80 % to about 95 % of the ionic conductivity of the liquid electrolyte excluding the first polymer at a temperature of 25 °C and a pressure of 1 atm. The gel polymer electrolyte may have an ionic conductivity in such ranges, and thus the cycle characteristics of the lithium battery 1 including the gel polymer electrolyte may be further improved. The ionic conductivity of the gel polymer electrolyte at a temperature of 25 °C and a pressure of 1 atm may be 0.10 at least milliseimens per centimeter (mS/cm), e.g., 0.15 mS/cm or more, 0.20 mS/cm or more, or 0.25 mS/cm or more. The ionic conductivity of the gel polymer electrolyte at a temperature of 25 °C and a pressure of 1 atm may be in a range of about 0.10 mS/cm to about 10.0 mS/cm, about 0.15 mS/cm to 5 mS/cm or more, about 0.20 mS/cm to 3 mS/cm or more, or about 0.25 mS/cm to about 2 mS/cm. The gel polymer electrolyte may have an ionic conductivity in such ranges, and thus the internal resistance of the lithium battery 1 including the gel polymer electrolyte may be reduced, thereby improving the reversibility of an electrode reaction of the lithium battery 1. Ion conductivity may be measured by using, for example, alternating current (AC) impedance analysis.

A lithium ion transference number (t_{Li}⁺) of the gel polymer electrolyte at a temperature of 25 °C and a pressure of 1 atm may be greater than a lithium ion transference number of the liquid electrolyte excluding the first polymer at a temperature of 25 °C and a pressure of 1 atm. The lithium ion transference number (t_{Li}⁺) of the gel polymer electrolyte at a temperature of 25 °C and a pressure of 1 atm may be more than 100 %, e.g., 105 % or more, or 110 % or more of the lithium ion transference number of the liquid electrolyte excluding the first polymer at a temperature of 25 °C and a pressure of 1 atm. The gel polymer electrolyte may have a higher lithium ion transference number than the liquid electrolyte, and thus the internal resistance of the lithium battery 1 including the gel polymer electrolyte may be reduced, thereby improving the reversibility of an electrode reaction of the lithium battery 1. In some embodiments, a lithium ion transference number may be measured by using, for example, AC impedance analysis. The lithium ion transference number of the gel polymer electrolyte at a temperature of 25 °C and a pressure of 1 atm may be, for example, at least 0.30, e.g., 0.31 or more, 0.32 or more, 0.33 or more, or 0.34 or more.

### Electrolyte: Porous substrate

The electrolyte layer 30 may further include a porous substrate in addition to the gel polymer electrolyte.

The porous substrate may be, for example, a porous membrane. The porous membrane may be, for example, a microporous membrane. The porous membrane may be, for example, a woven fabric or a nonwoven fabric. Any porous membrane may be used as long as the porous membrane may be commonly used in a lithium battery. The porous membrane may include, for example, a glass fiber, an olefin-based resin, a fluorine-based resin, an ester-based resin, an imide-based resin, an acrylic resin, a cellulose-based resin, and/or a (e.g., any suitable) combination thereof. The olefin-based resin may include, for example, polyethylene (PE), polypropylene (PP), and/or a (e.g., any suitable) combination thereof. The fluorine-based resin may include, for example, polyvinylidene fluoride (PVDF), polytetrafluoroethylene (PTFE), and/or a (e.g., any suitable) combination thereof. The ester-based resin may include, for example, polyethylene terephthalate (PET), polybutylene terephthalate (PBT), and/or a (e.g., any suitable) combination thereof. The imide-based resin may include, for example, polyamidoimide, polyetherimide, and/or a (e.g., any suitable) combination thereof. The acrylic resin may include, for example, polyacrylonitrile, polyacrylate, and/or a (e.g., any suitable) combination thereof. The cellulose-based resin may include, for example, carboxymethylcellulose, microbial cellulose, plant cellulose, animal cellulose, and/or a (e.g., any suitable) combination thereof.

The porous substrate may be impregnated with a gel polymer electrolyte. A precursor composition for forming a gel polymer electrolyte may be injected into a porous substrate and then crosslinked to prepare a gel polymer electrolyte impregnated into the porous substrate. The porous substrate may include for example, a porous membrane having an excellent or suitable impregnation ability with respect to the precursor composition for forming a gel polymer electrolyte. The porous substrate may be, for example, a separator.

The porous substrate may be prepared through the following example method, but one or more embodiments are not necessarily limited to such a method. A method may be adjusted according to desired or required conditions.

First, polymer resin, a filler, and a solvent may be mixed to prepare a composition for forming a porous membrane. The composition for forming a porous membrane may be directly applied onto, for example, an electrode and dried to form a porous membrane. In one or more embodiments, the composition for forming a porous membrane may be cast on a support and dried, and then a porous membrane peeled off of the support may be laminated on an electrode to form a porous membrane. The polymer used to prepare the porous membrane is not limited, and, for example, the herein-described resin may be used. As the polymer used to prepare the porous membrane, any polymer may be used as long as the polymer may be used as a binder for an electrode. The polymer used to prepare the porous membrane may include, for example, a vinylidenefluoride/hexafluoropropylene copolymer, PVDF, polyacrylonitrile, polymethylmethacrylate, and/or a (e.g., any suitable) combination thereof.

### Anode

Referring to FIG. 1, the lithium battery 1 according to one or more embodiments may include an anode 20, wherein the anode 20 includes the anode current collector 21.

### Anode: Anode current collector

The anode current collector 21 may include, for example, a metal substrate. The metal substrate may include a first metal as a main component or may include (e.g., consist of) the first metal. A content (e.g., amount) of the first metal included in the metal substrate may be, for example, at least 90 wt%, e.g., 95 wt% or more, 99 wt% or more, or 99.9 wt% or more, with respect to (e.g., of 100 wt% of) the total weight of the metal substrate. The metal substrate may include (e.g., consist of), for example, a material that does not react with lithium, for example, a material that does not form an alloy and/or compound with lithium. Examples of the first metal may include at least one selected from among copper (Cu), nickel (Ni), stainless steel (SUS), iron (Fe), and cobalt (Co), but one or more embodiments are not necessarily limited thereto. Any material may be used as long as the material may be used as a current collector in the art. The metal substrate may include (e.g., consist of), for example, one of the herein-described metals or an alloy of two or more metals. The metal substrate may be, for example, in the form of a sheet or foil. A thickness of the anode current collector 21 may be, for example, in a range of about 5 micrometer (µm) to about 50 µm, about 10 µm to about 50 µm, about 10 µm to about 40 µm, or about 10 µm to about 30 µm, but is not necessarily limited to such a range. The thickness of the anode current collector 21 may be selected according to the desired or required characteristics of a lithium metal battery.

The anode current collector 21 may further include a coating layer, which includes a second metal, on the metal substrate. The anode current collector 21 may include, for example, the metal substrate, and the coating layer arranged on the metal substrate and including the second metal. The second metal may have a higher Mohs hardness value than the first metal (i.e., higher than a Mohs hardness value of the first metal). For example, the coating layer including the second metal may be harder than the metal substrate including the first metal, and thus the deterioration of the metal substrate may be prevented or reduced. A material constituting the metal substrate may have, for example, a Mohs hardness of at most 5.5. The first metal may have, for example, a Mohs hardness of 5.5 or less, 5.0 or less, 4.5 or less, 4.0 or less, 3.5 or less, or 3.0 or less. The first metal may have, for example, a Mohs hardness of about 2.0 to about 6.0. A material constituting the coating layer may have, for example, a Mohs hardness of 6.0 or more. For example, the second metal may have a Mohs hardness of 6.0 or more, 6.5 or more, 7.0 or more, 7.5 or more, 8.0 or more, 8.5 or more, or 9.0 or more. The second metal may have, for example, a Mohs hardness of about 6.0 to about 12. If (e.g., when) the Mohs hardness of the second metal is excessively (or substantially) low, it may be difficult to suppress or reduce the deterioration of the anode current collector 21. If (e.g., when) the Mohs hardness of the second metal is excessively (or substantially) high, processing may not be easy. The second metal may include, for example, at least one selected from among titanium (Ti), manganese (Mn), niobium (Nb), tantalum (Ta), iridium (Ir), vanadium (V), rhenium (Re), osmium (Os), tungsten (W), chromium (Cr), boron (B), ruthenium (Ru), and rhodium (Rh). A thickness of the coating layer may be, for example, in a range of about 10 nanometer (nm) to about 1 micrometer (µm), about 50 nm to about 500 nm, about 50 nm to about 200 nm, or about 50 nm to about 150 nm.

In one or more embodiments, the anode current collector 21 may include, for example, a base film and a metal layer arranged on at least one side (e.g., on one or two sides) of the base film. The base film may include, for example, a polymer. The polymer may be, for example, a thermoplastic polymer. The polymer may include, for example, PET, PE, PP, PBT, polyimide (PI), and/or a (e.g., any suitable) combination thereof. The base film may be, for example, an insulator. The base film may include an insulating thermoplastic polymer, and thus, if (e.g., when) a short circuit occurs, the base film may soften, (e.g., melt or liquefy), to interrupt the operation of a battery, thereby suppressing or reducing a rapid increase in current. The metal layer may include, for example, copper (Cu), nickel (Ni), stainless steel (SUS), iron (Fe), and cobalt (Co), or an alloy thereof. The metal layer may serve as an electrochemical fuse and may be cut if (e.g., when) an overcurrent occurs, thereby performing a short circuit prevention function. A thickness of the metal layer may be adjusted to set or adjust a limit current and a maximum current. The metal layer may be electrodeposited or deposited on the base film. If (e.g., when) the thickness of the metal layer decreases, a limit current and/or a maximum current of the anode current collector 21 may decrease, and thus the stability of the lithium battery 1 during a short circuit may be improved. A lead tab may be added onto the metal layer for external connection. The lead tab may be welded to the metal layer or a metal layer/base film stack through ultrasonic welding, laser welding, spot welding, and/or the like. While the base film and/or the metal layer are melted during welding, the metal layer may be electrically connected to the lead tab. In order to more strongly weld the metal layer and the lead tab, a metal chip may be added between the metal layer and the lead tab. The metal chip may be a flake including (e.g., consisting of) the same material as a metal of the metal layer. The metal chip may be, for example, metal foil or a metal mesh. The metal chip may be, for example, aluminum foil, copper foil, or SUS foil. The metal chip may be arranged on the metal layer and then welded to the lead tab, and thus the lead tab may be welded to a metal chip/metal layer stack or a metal chip/metal layer/base film stack. During welding, while the base film, the metal layer, and/or the metal chip are melted, the metal layer or a metal layer/metal chip stack may be electrically connected to the lead tab. A metal chip and/or a lead tab may be added onto a portion of the metal layer. A thickness of the base film may be, for example, in a range of about 1 µm to 50 µm, about 1.5 µm to about 50 µm, about 1.5 µm to about 40 µm, about 1 µm to about 30 µm, about 1 µm to about 20 µm, or about 1 µm to about 10 µm. The base film may have a thickness in such ranges, and thus a weight of an electrode assembly may be more effectively reduced. A melting point of the base film may be, for example, in a range of about 100 °C to about 300 °C, about 100 °C to about 250 °C, or about 100 °C to about 200 °C. The base film may have a melting point in such ranges, and thus the base film may be melted and easily coupled to the lead tab in a process of welding the lead tab. In order to improve adhesive strength between the base film and the metal layer, surface treatment such as corona treatment may be performed on the base film. A thickness of the metal layer may be, for example, in a range of about 0.01 µm to about 3 µm, about 0.1 µm to about 3 µm, about 0.1 µm to about 2 µm, or about 0.1 µm to about 1 µm. The metal layer may have a thickness in such ranges, and thus the stability of an electrode assembly may be secured while conductivity is maintained. A thickness of the metal chip may be, for example, in a range of about 2 µm to about 10 µm, about 2 µm to about 7 µm, or about 4 µm to about 6 µm. The metal chip may have a thickness in such ranges, and thus the metal layer and the lead tab may be more easily connected. The anode current collector 21 may have such a structure, and thus a weight of the anode 20 may be reduced, thereby improving the energy density of the anode 20 and the lithium battery 1.

### Anode: Lithium metal layer

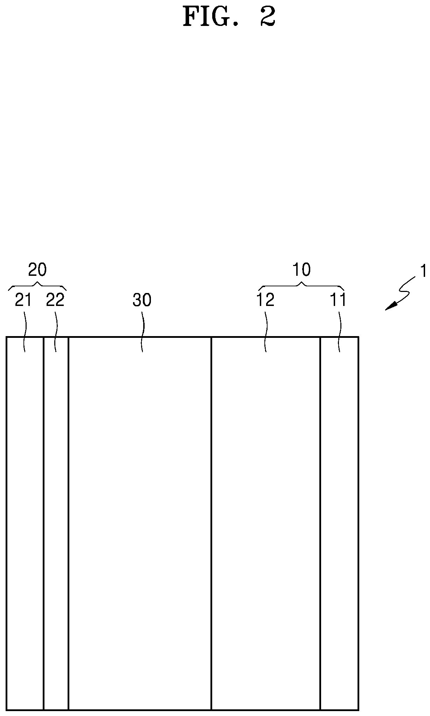

Referring to FIG. 2, the lithium battery 1 may further include a lithium metal layer 22 which, after charging, is arranged between the anode current collector 21 and the electrolyte layer 30. The lithium metal layer 22 may correspond to an anode active material layer.

The lithium metal layer 22 may be a metal layer including lithium or a lithium alloy. The lithium metal layer 22 may include lithium or the lithium alloy. The lithium metal layer 22 may serve, for example, as a lithium reservoir. Examples of the lithium alloy may include a Li-Al alloy, a Li-Sn alloy, a Li-In alloy, a Li-Ag alloy, a Li-Au alloy, a Li-Zn alloy, a Li-Ge alloy, a Li-Si alloy, and/or the like, but one or more embodiments are not limited to. Any material may be used as long as the material may be used as a lithium alloy in the art. The lithium metal layer 22 may include (e.g., consist of) one of such alloys of lithium or may include (e.g., consist of) one or more suitable types (kinds) of alloys. The lithium metal layer 22 may be, for example, a plated layer. For example, the lithium metal layer 22 may be precipitated between the electrolyte layer 30 and the anode current collector 21 during a charging process of the lithium battery 1.

A thickness of the lithium metal layer 22 is not limited, but may be, for example, in a range of about 1 µm to about 200 µm, about 1 µm to about 150 µm, about 1 µm to about 100 µm, about 1 µm to about 50 µm, about 1 µm to about 30 µm, about 1 µm to about 22 µm, or about 1 µm to about 10 µm. If (e.g., when) the lithium metal layer 22 is excessively (or substantially) thin, it is difficult for the lithium metal layer 22 to function as a lithium reservoir. If (e.g., when) the lithium metal layer 23 is excessively (or substantially) thick, the volume of the lithium battery 1 may excessively (or substantially) increase and the cycle characteristics of the lithium battery 1 may (e.g., actually) deteriorate. Thickness of the lithium metal layer may be measured by scanning electron microscopy (SEM) image for a cross-section of the lithium metal layer 22.

For example, the lithium metal layer 22 may be thinner than the electrolyte layer 30. The thickness of the lithium metal layer 22 may be, for example, at most 70 %, e.g., 60 % or less, 50 % or less, 40 % or less, or 30 % or less of a thickness of the electrolyte layer 30. The thickness of the lithium metal layer 22 may be, for example, in a range of about 1 % to about 70 %, about 1 % to about 60 %, about 1 % to about 50 %, about 1 % to about 40 %, or about 1 % to about 30 % of the thickness of the electrolyte layer 30. The lithium metal layer 22 may be thinner than the electrolyte layer 30, and thus a change in volume of the lithium battery 1 during charging or discharging may be suppressed or reduced. In one or more embodiments, deterioration may be suppressed or reduced due to a change in volume of the lithium battery 1.

For example, the lithium metal layer 22 may be thinner than a cathode active material layer 12. The thickness of the lithium metal layer 22 may be, for example, at most 70 %, e.g., 60 % or less, 50 % or less, 40 % or less, or 30 % or less of a thickness of the cathode active material layer 12. The thickness of the lithium metal layer 22 may be, for example, in a range of about 1 % to about 70 %, about 1 % to about 60 %, about 1 % to about 50 %, about 1 % to about 40 %, or about 1 % to about 30 % of the thickness of the cathode active material layer 12. The lithium metal layer 22 may be thinner than the cathode active material layer 12, and thus a change in volume of the lithium battery 1 during charging or discharging may be suppressed or reduced. In one or more embodiments, deterioration may be suppressed or reduced due to a change in volume of the lithium battery 1.

In X-ray photoelectron spectroscopy (XPS) analysis of a surface of the lithium metal layer 22, for example, a peak intensity derived from a fluorine (F) element may be greater than a peak intensity derived from an oxygen (O) element. In the XPS analysis of the surface of the lithium metal layer 22, for example, the peak intensity derived from the fluorine (F) element may be more than 100 %, (e.g., 105 % or more, or 120 % or more) of the peak intensity derived from the oxygen (O) element. In the XPS analysis of the surface of the lithium metal layer 22, for example, the peak intensity derived from the fluorine (F) element may be in a range of more than 100 % to about 200 %, about 105 % to about 200 %, about 110 % to about 200 %, or about 120 % to about 200 % of the peak intensity derived from the oxygen (O) element. An SEI layer formed on the surface of the lithium metal layer 22 may mainly include an inorganic compound including fluorine (F), and thus the structural stability of the SEI layer may be improved. In one or more embodiments, the cycle characteristics of the lithium battery 1 may be improved. In one or more embodiments, if (e.g., when) the SEI layer formed on the surface of the lithium metal layer 22 mainly includes an organic compound including oxygen (O), the structural stability of the SEI layer may be reduced. A peak derived from the fluorine (F) element may be, for example, a peak derived from a fluorine (F) 1s orbital. A peak derived from the oxygen (O) element may be, for example, a peak derived from an oxygen (O) 1s orbital.

The lithium metal layer 22 may be precipitated due to the lithium battery 1 being charged after being assembled without being included during the assembly of the lithium battery 1, and thus the energy density of the lithium battery 1 may be increased. In one or more embodiments, if (e.g., when) the lithium metal layer 22 is additionally arranged due to the lithium battery 1 being charged after being assembled, the anode 20, for example, a region between the anode current collector 21 and the electrolyte layer 30, may be a Li-free region that does not include lithium (Li) in an initial state of the lithium battery 1 or in a state after full discharging thereof.

### Cathode

Referring to FIG. 1, the lithium battery 1 according to one or more embodiments may include a cathode 10, where the cathode 10 includes a cathode current collector 11 and the cathode active material layer 12 arranged on one side of the cathode current collector 11.

### Cathode: Cathode active material layer

The cathode active material layer 12 may include a cathode active material. As the cathode active material, for example, any material may be used as long as the material may be a lithium-containing metal oxide and may be used in the art. For example, the cathode active material may include at least one composite oxide of lithium and a metal selected from among cobalt, manganese, nickel, and/or a (e.g., any suitable) combination thereof. A specific example of the cathode active material may include a compound represented by any one of formulas of LiₐA_{1-b}B_{'b}D₂, wherein 0.90≤a≤1 and 0≤b≤0.5; LiₐE_{1-b}B'_{b}O_{2-c}D_{c}; wherein 0.90≤a≤1, 0≤b≤0.5, and 0≤c≤0.05; LiE_{2-b}B'_{b}O_{4-c}D_{c}, wherein 0≤b≤0.5 and 0≤c≤0.05; LiₐNi_{1-b-c}Co_{b}B_{'c}D_{α}, wherein 0.90≤a≤1, 0≤b≤0.5, 0≤c≤0.05, and 0<α≤2; LiₐNi_{1-b-c}Co_{b}B_{'c}O_{2-α}F_{α}, wherein 0.90≤a≤1, 0≤b≤0.5, 0≤c≤0.05, and 0<α<2; LiₐNi_{1-b-c}Co_{b}B'_{c}O_{2-α}F₂, wherein 0.90≤a≤1, 0≤b≤0.5, 0≤c≤0.05, and 0<α<2; LiₐNi_{1-b-c}Mn_{b}B_{'c}D_{α}, wherein 0.90≤a≤1, 0≤b≤0.5, 0≤c≤0.05, and 0<α≤2; LiₐNi_{1-b-c}Mn_{b}B'_{c}O_{2-α}F'_{α}, wherein 0.90≤a≤1, 0≤b≤0.5, 0≤c≤0.05, and 0<α<2; LiₐNi_{1-b-c}Mn_{b}B'_{c}O_{2-α}F'α, wherein 0.90≤a≤1, 0≤b≤0.5, 0≤c≤0.05, and 0<α<2; LiₐNi_{b}E_{c}G_{d}O₂, wherein 0.90≤a≤1, 0≤b≤0.9, 0≤c≤0.5, and 0.001≤d≤0.1; LiₐNi_{b}Co_{c}Mn_{d}GₑO₂, wherein 0.90≤a≤1, 0≤b≤0.9, 0≤c≤0.5, 0≤d≤0.5, and 0.001≤e≤ 0.1; LiₐNiG_{b}O₂, wherein 0.90≤a≤1 and 0.001≤b≤0.1; LiₐCoG_{b}O₂, wherein 0.90≤a≤1 and 0.001≤b≤0.1; LiₐMnG_{b}O₂, wherein 0.90≤a≤1 and 0.001 ≤b≤0.1; LiₐMn₂G_{b}O₄, wherein 0.90≤a≤1 and 0.001≤b≤0.1; QO₂; QS₂; LiQS₂; V₂O₅; LiV₂O₅; Lil'O₂; LiNiVO₄; Li_{(3-f)}J₂(PO₄)₃, wherein 0≤f≤2; Li_{(3-f)}Fe₂(PO₄)₃, wherein 0≤f≤2; and LiFePO₄.

In the formulas representing the herein-described compounds, A may be Ni, Co, Mn, and/or a (e.g., any suitable) combination thereof, B' may be Al, Ni, Co, Mn, Cr, Fe, Mg, Sr, V, a rare earth element, and/or a (e.g., any suitable) combination thereof, D may be O, F, S, P, and/or a (e.g., any suitable) combination thereof, E may be Co, Mn, and/or a (e.g., any suitable) combination thereof, F' may be F, S, P, and/or a (e.g., any suitable) combination thereof, G may be Al, Cr, Mn, Fe, Mg, La, Ce, Sr, V, and/or a (e.g., any suitable) combination thereof, Q may be Ti, Mo, Mn, and/or a (e.g., any suitable) combination thereof, I' may be Cr, V, Fe, Sc, Y, and/or a (e.g., any suitable) combination thereof, and J may be V, Cr, Mn, Co, Ni, Cu, and/or a (e.g., any suitable) combination thereof. A compound in which a coating layer is added to a surface of the preceding compound may also be used, and/or a (e.g., any suitable) mixture of the preceding compound and a compound in which a coating layer is added may also be used. The coating layer added to the surface of the preceding compound may include, for example, a coating element compound of an oxide or a hydroxide of a coating element, an oxyhydroxide of a coating element, an oxycarbonate of a coating element, or a hydroxycarbonate of a coating element. A compound constituting the coating layer may be amorphous or crystalline. The coating element included in the coating layer may include Mg, Al, Co, K, Na, Ca, Si, Ti, V, Sn, Ge, Ga, B, As, Zr, and/or a (e.g., any suitable) mixture thereof. A method of forming the coating layer may be selected within a range that does not adversely affect the physical properties of the cathode active material. A coating method may include, for example, spray coating, dipping, and/or the like. A specific coating method may be well understood by those skilled in the art, and thus a detailed description thereof will not be provided.

The cathode active material may include, for example, at least one selected from among lithium transition metal oxides represented by Formulas 1 to 8:

**Formula 1** LiₐNiₓCO_{y}M_{z}O_{2-b}A_{b}

in Formula 1, 1.0≤a≤1.2, 0≤b≤0.2, 0.8≤x<1, 0≤y≤0.3, 0<z≤0.3, x+y+z=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), and/or a (e.g., any suitable) combination thereof, and A may be F, S, Cl, Br, and/or a (e.g., any suitable) combination thereof,

**Formula 2** LiNiₓCo_{y}Mn_{z}O₂

**Formula 3** LiNiₓCo_{y}Al_{z}O₂

in Formula 2 and Formula 3, 0.8≤x≤0.95, 0≤y≤0.2, 0<z≤0.2, and x+y+z=1,

**Formula 4** LiNiₓCo_{y}Mn_{z}Al_{w}O₂

in Formula 4, 0.8≤x≤0.95, 0≤y≤0.2, 0<z≤0.2, 0<w≤0.2, and x+y+z+w=1,

**Formula 5** LiₐCOₓM_{y}O_{2-b}A_{b}

in Formula 5,
1.0≤a≤1.2, 0≤b≤0.2, 0.9≤x≤1, 0≤y≤0.1, x+y=1, M may be manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), and/or a (e.g., any suitable) combination thereof, and A may be F, S, Cl, Br, and/or a (e.g., any suitable) combination thereof,

**Formula 6** LiₐNiₓMn_{y}M'_{z}O_{2-b}A_{b}

in Formula 6, 1.0≤a≤1.2, 0≤b≤0.2, 0<x≤0.3, 0.5≤y<1, 0<z≤0.3, x+y+z=1, M' may be cobalt (Co), niobium (Nb), vanadium (V), magnesium (Mg), gallium (Ga), silicon (Si), tungsten (W), molybdenum (Mo), iron (Fe), chromium ( Cr), copper (Cu), zinc (Zn), titanium (Ti), aluminum (Al), boron (B), and/or a (e.g., any suitable) combination thereof, and A may be F, S, Cl, Br, and/or a (e.g., any suitable) combination thereof,

**Formula 7** LiₐM1ₓM2_{y}PO_{4-b}X_{b}

in Formula 7, 0.90≤a≤1.1, 0≤x≤0.9, 0≤y≤0.5, 0.9<x+y<1.1, 0≤b≤2, M1 may be chromium (Cr), manganese (Mn), iron (Fe), cobalt (Co), nickel (Ni), copper (Cu), zirconium (Zr), and/or a (e.g., any suitable) combination thereof, M2 may be magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), and/or a (e.g., any suitable) combination thereof, and X may be O, F, S, P, and/or a (e.g., any suitable) combination thereof, and

**Formula 8** LiₐM3_{z}PO₄

in Formula 8, 0.90≤a≤1.1, 0.9≤z≤1.1, and M3 may be chromium (Cr), manganese (Mn), iron (Fe), cobalt (Co), nickel (Ni), copper (Cu), zirconium (Zr), and/or a (e.g., any suitable) combination thereof.

The cathode active material layer 12 may further include a conductive material. Examples of the conductive material may include carbon black, graphite particles, natural graphite, artificial graphite, acetylene black, Ketjen black, and a carbon fiber; carbon nanotubes; a metal powder, metal fiber, or a metal tube of copper, nickel, aluminum, or silver; and a conductive polymer such as a polyphenylene derivative, but one or more embodiments are not limited thereto. Any material may be used as long as the material may be used a conductive material in the art. In one or more embodiments, the cathode 10 may not include (e.g., may exclude), for example, a separate conductive material.

The cathode active material layer 12 may further include, for example, a binder. The binder may include vinylidene fluoride/hexafluoropropylene copolymer, PVDF, polyacrylonitrile, polymethyl methacrylate, PTFE, a mixture of the preceding polymers, a styrene butadiene rubber-based polymer, and/or the like.

A content (e.g., amount) of the cathode active material included in the cathode active material layer 12 may be in a range of about 80 wt% to about 99 wt%, about 90 wt% to about 99 wt%, or about 95 wt% to about 99 wt% with respect to the total weight of the cathode active material layer 12.

A content (e.g., amount) of the conductive material included in the cathode active material layer 12 may be in a range of about 0.1 wt% to about 10 wt% or about 0.1 wt% to about 5 wt% of (100 wt% of) the total weight of the cathode active material layer 12.

A content (e.g., amount) of the binder included in the cathode active material layer 12 may be in a range of about 0.1 wt% to about 10 wt% or about 0.1 wt% to about 5 wt% of (100 wt% of) the total weight of the cathode active material layer 12.

The contents (e.g., amounts) of the cathode active material, the conductive material, and the binder included in the cathode 10 are at levels commonly used in a lithium battery. According to the use and configuration of a lithium battery, at least one of the conductive material and the binder may not be provided.

### Cathode: Cathode current collector

As a material constituting the cathode current collector 11, any material, which does not react with lithium, for example, any material, which does not form an alloy or compound with lithium and has conductivity (e.g., is a conductor), may be used. The cathode current collector 11 may include, for example, a metal or alloy. The cathode current collector 11 may be include (e.g., consist of), for example, aluminum (Al), indium (In), copper (Cu), magnesium (Mg), stainless steel, titanium (Ti), iron (Fe), cobalt (Co), nickel (Ni), zinc (Zn), germanium (Ge), or an alloy thereof. The cathode current collector 11 may have a form of one selected from among, for example, a sheet, foil, a film, a plate, a porous body, a mesoporous body, a through-hole-containing body, a polygonal ring body, a mesh body, a foam body, and a nonwoven body, but one or more embodiments are not necessarily limited to the form. Any form may be used as long as the form may be used in the art.

In one or more embodiments, the cathode current collector 11 may include, for example, a base film and a metal layer arranged on a, e.g., at least one side (e.g., on one or two sides or surfaces) of the base film. The base film may include, for example, a polymer. The polymer may be, for example, a thermoplastic polymer. The polymer may include, for example, PET, PE, PP, PBT, PI, and/or a (e.g., any suitable) combination thereof. The polymer may be an insulating polymer. The base film may include an insulating thermoplastic polymer, and thus, if (e.g., when) a short circuit occurs, the base film may soften or liquefy to interrupt the operation of a battery, thereby suppressing or reducing a rapid increase in current. The metal layer may include, for example, aluminum (Al), indium (In), copper (Cu), magnesium (Mg), stainless steel, titanium (Ti), iron (Fe), cobalt (Co), nickel (Ni), zinc (Zn), germanium (Ge), or an alloy thereof. The cathode current collector 11 may additionally include a metal chip and/or a lead tab. The base film, metal layer, metal chip, and lead tab of the cathode current collector 11 may be defined as for the herein-described cathode current collector 11. The cathode current collector 11 may have such a structure, and thus a weight of the cathode 10 may be reduced, thereby improving the energy density of the cathode 10 and the lithium battery 1.

### Method of manufacturing lithium battery

A method of manufacturing a lithium battery 1 according to one or more embodiments may include preparing a precursor composition for forming a gel polymer electrolyte, stacking an anode current collector, a porous membrane, and a cathode to prepare an assembly, injecting the precursor composition for forming a gel electrolyte into the assembly, and crosslinking the injected precursor composition for forming a gel electrolyte to manufacture a lithium battery 1 including an electrolyte layer which includes a gel polymer electrolyte. The gel polymer electrolyte may include a first polymer, a first lithium salt, a second lithium salt, a first organic solvent, and a second organic solvent, wherein the first polymer includes a repeating unit derived from a first crosslinking monomer including at least three (e.g., three or more) reactive functional groups, and the first lithium salt and the second lithium salt each independently include a borate-based lithium salt. In the lithium battery 1 manufactured through such a method, the gel polymer electrolyte may have excellent or suitable ionic conductivity and improved mechanical properties as compared with a liquid electrolyte so that a change in volume of the lithium battery 1 during charging or discharging may be more effectively suppressed or reduced. In one or more embodiments, the deterioration of the lithium battery 1 may be prevented or reduced, and the cycle characteristics of the lithium battery 1 may be improved.

The precursor composition for forming a gel polymer electrolyte may be prepared. The precursor composition for forming a gel polymer electrolyte may include a first crosslinking monomer, a thermal initiator, and a liquid electrolyte. The liquid electrolyte may include a first lithium salt, a second lithium salt, a first organic solvent, and a second organic solvent. A content (e.g., amount) of the first crosslinking monomer may be, for example, in a range of about 1 wt% to about 20 wt% of (100 wt% of) the total weight of a composition for forming a cathode electrolyte. The thermal initiator may be a t-amyl peroxide-based thermal initiator and/or an azobis-based thermal initiator, and/or the like, but the present disclosure is not limited thereto. Any material may be used as long as the material may be used a thermal initiator in the art. The types (kinds) of the first crosslinking monomer and the liquid electrolyte may be defined as for the herein-described gel polymer electrolyte. The precursor composition for forming a gel electrolyte may be prepared, for example, by adding the first crosslinking monomer and the thermal initiator to the liquid electrolyte. Contents of the first lithium salt and the second lithium salt may each independently be, for example, in a range of more than 0 M to about 1.2 M with respect to the liquid electrolyte.

The cathode may be prepared. For example, a cathode active material, a conductive material, a binder, and a solvent may be mixed to prepare a cathode active material composition. The prepared cathode active material composition may be applied directly onto a cathode current collector and dried to prepare a cathode plate on which a cathode active material layer is formed. In one or more embodiments, the cathode active material composition may be cast on a separate support, and then a film obtained by being peeled off of the support may be laminated on a cathode current collector to prepare a cathode plate on which a cathode active material layer is formed. The solvent may include, for example, N-methylpyrrolidone, but one or more embodiments are not limited thereto. A plasticizer or a pore former may be further added to the cathode active material composition to form pores in an electrode plate. The cathode may be prepared through the following methods described herein, but one or more embodiments are not necessarily limited to these methods. The types (kinds) and contents of the cathode active material, the conductive material, and the binder may be defined as for the herein-described cathode active material layer.

The anode current collector may be prepared. The anode current collector may be, for example, copper foil. The anode current collector may be defined as for the herein-described anode.

The porous membrane may be prepared. The porous membrane may be, for example, a PE separator. The porous membrane may be defined as for the herein-described electrode layer.

The anode current collector, the porous membrane, and the cathode may be stacked to prepare an assembly. The assembly may be accommodated in a can or pouch. The porous membrane may be defined as for the herein-described cathode electrolyte.

A composition for forming a cathode electrolyte may be injected into the assembly. The composition for forming a cathode electrolyte may be injected into the assembly accommodated in the can or pouch so that the composition for forming a cathode electrolyte may be impregnated into the porous membrane and the cathode active material layer.

A lithium battery 1 including the cathode electrolyte may be manufactured by crosslinking the injected composition for forming a cathode electrolyte. The crosslinking may be, for example, thermal crosslinking, ultraviolet crosslinking, and/or the like. The thermal crosslinking may be performed, for example, at a temperature of about 60 °C to about 80 °C for 1 hour to 2 hours, but one or more embodiments are not limited to such conditions. The conditions may be appropriately or suitably selected according to the desired or required degree of crosslinking. The composition for forming a cathode electrolyte may be crosslinked so that the cathode electrolyte may be formed in a region in which the porous membrane and the cathode active material layer are arranged. The cathode electrolyte may be arranged in pores included in the cathode active material layer and pores included in the porous membrane.

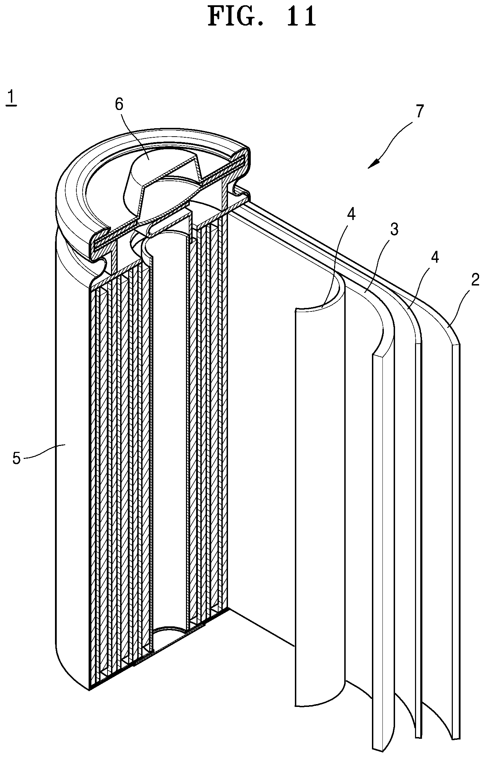

A manufactured lithium battery 1 may have, for example, structures shown in FIGs. 11 to 14.

Referring to FIG. 11, a lithium battery 1 according to one or more embodiments may include a cathode 3, an anode 2, as described herein, and a separator 4. The cathode 3, the anode 2, and the separator 4 may be wound or folded to form a battery structure 7. The formed battery structure 7 may be accommodated in a battery case 5. A composition for forming a cathode electrolyte may be injected into the battery case 5, crosslinked, and sealed with a cap assembly 6 to complete the lithium battery 1. The battery case 5 may have a cylindrical shape, but one or more embodiments are not necessarily limited to such a shape. For example, the battery case 5 may have a prismatic shape, a thin film shape, and/or the like.

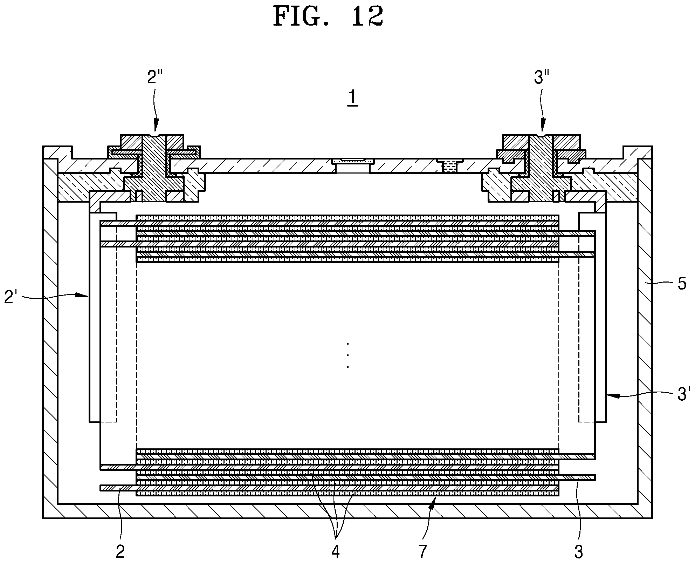

Referring to FIG. 12, a lithium battery 1 according to one or more embodiments may include a cathode 3, an anode 2 as described herein, and a separator 4. The cathode 3, the anode 2, and the separator 4 may be wound, folded, or stacked to form a battery structure 7. The formed battery structure 7 may be accommodated in a battery case 5. A composition for forming a cathode electrolyte may be injected into the battery case 5, crosslinked, and sealed to complete the lithium battery 1. The battery case 5 may have a prismatic shape, but one or more embodiments are not necessarily limited to such a shape. For example, the battery case 5 may have a cylindrical shape, a thin film shape, and/or the like. A cathode lead tab 3' and a cathode terminal 3" may be electrically connected to the cathode 3. An anode lead tab 2' and an anode terminal 2" may be electrically connected to the anode 2.

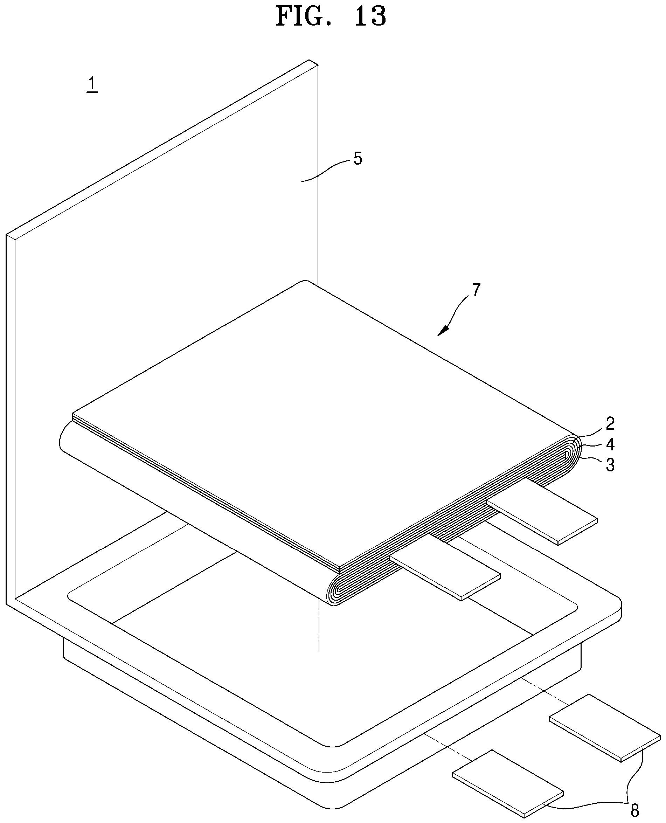

Referring to FIG. 13, a lithium battery 1 according to one or more embodiments may include a cathode 3, an anode 2 as described herein, and a separator 4. The separator 4 may be arranged between the cathode 3 and the anode 2, and the cathode 3, the anode 2, and the separator 4 may be wound or folded to form a battery structure 7. The formed battery structure 7 may be accommodated in a battery case 5. The lithium battery 1 may include electrode tabs 8 serving as an electrical path for guiding a current generated in the battery structure 7 to the outside. A composition for forming a cathode electrolyte may be injected into the battery case 5, crosslinked, and sealed to complete the lithium battery 1. The battery case 5 may have a prismatic shape, but one or more embodiments are not necessarily limited to such a shape. For example, the battery case 5 may have a cylindrical shape, a thin film shape, and/or the like.

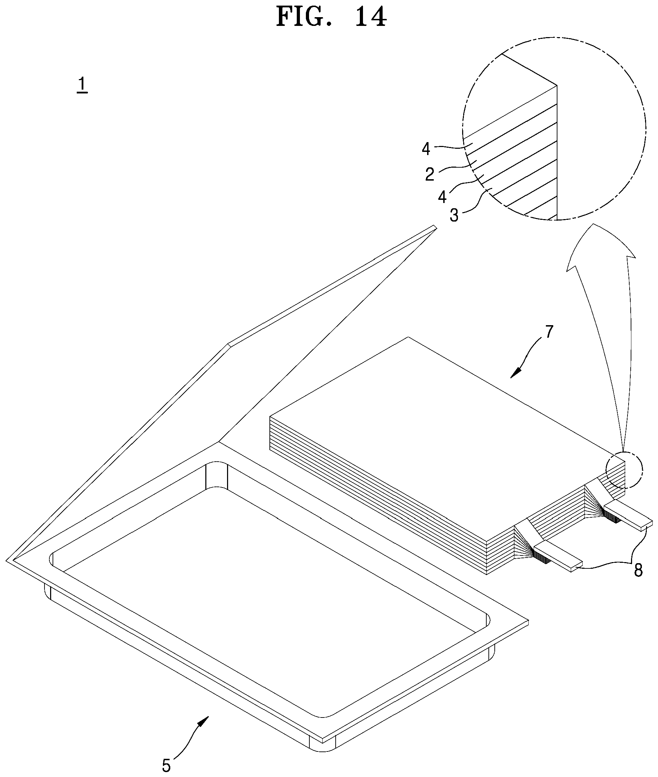

Referring to FIG. 14, a lithium battery 1 according to one or more embodiments may include a cathode 3, an anode 2 as described herein, and a separator 4. The separator 4 may be arranged between the cathode 3 and the anode 2 to form a battery structure 7. The battery structure 7 may be stacked in a bi-cell structure and then accommodated in a battery case 5. The lithium battery 1 may include electrode tabs 8 serving as an electrical path for guiding a current generated in the battery structure 7 to the outside. A composition for forming a cathode electrolyte may be injected into the battery case 5, crosslinked, and sealed to complete the lithium battery 1. The battery case 5 may have a prismatic shape, but one or more embodiments are not necessarily limited to such a shape. For example, the battery case 5 may have a cylindrical shape, a thin film shape, and/or the like.

A pouch-type or kind lithium battery 1 may correspond to a case in which a pouch is used as a battery case in the lithium batteries of FIGs. 11 to 14. The pouch-type or kind lithium battery 1 may include one or more battery structures. A separator may be arranged between a cathode and an anode to form the battery structure. A plurality of battery structures may be stacked in a thickness direction, impregnated with an organic electrolyte, and then accommodated and sealed in a pouch to complete a pouch-type or kind lithium battery. For example, the herein-described cathode, anode, and separator may be simply stacked and accommodated in a pouch in the form of an electrode assembly or may be wound or folded into a jelly roll-shaped electrode assembly and then accommodated in a pouch. Next, a composition for forming a cathode electrolyte may be injected into the pouch, crosslinked, and sealed to complete a lithium battery.

The lithium battery 1 of the present disclosure may have excellent or suitable lifespan characteristics and high energy density and thus may be used, for example, in electric vehicles (EVs). For example, the lithium battery 1 may be used in hybrid vehicles such as plug-in hybrid electric vehicles (PHEVs). In one or more embodiments, the lithium battery 1 may be used in fields in which large amounts of power are desired or required to be stored. For example, the lithium battery 1 may be used in electric bicycles, power tools, and/or the like.

A plurality of lithium batteries may be stacked to form a battery module, and a plurality of battery modules may form a battery pack. The battery pack may be used in all devices requiring high capacity and high output power. For example, the battery pack may be used in laptops, smartphones, electric vehicles, and/or the like. A battery module may include, for example, a plurality of batteries and a frame for holding the plurality of batteries. A battery pack may include, for example, a plurality of battery modules and a busbar for connecting the plurality of battery modules. The battery module and/or the battery pack may further include a cooling device. A plurality of battery packs may be adjusted by a battery management system. The battery management system may include a battery pack and a battery controller connected to the battery pack.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or ± 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6. Applicant therefore reserves the right to amend this specification, including the claims, to expressly recite any sub-range subsumed within the ranges expressly recited herein.

The present disclosure will be described in more detail through the following Examples and Comparative Examples. However, Examples are for illustrative purposes only, and the scope of the present disclosure is not limited by Examples.

### EXAMPLES

### Precursor composition and electrolyte

### Preparation Example 1: DEC/FEC (2:1)+LiDFOB+LiBF₄+DPHA 2 wt%

A liquid electrolyte was prepared by adding 0.6 M LiBF₄ and 0.6 M lithium difluoro(oxalate)borate (LiDFOB) to a mixed solvent of DEC (diethyl carbonate) and FEC (fluoroethylene carbonate) having a volume ratio of 2:1.

A precursor composition for forming a gel polymer electrolyte was prepared by adding dipentaerythritol hexaacrylate (DPHA) as a first crosslinking monomer and t-amyl peroxide as a thermal initiator to the liquid electrolyte, wherein the DPHA was an ester-based crosslinking agent represented by Formula 13.

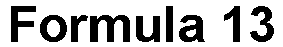

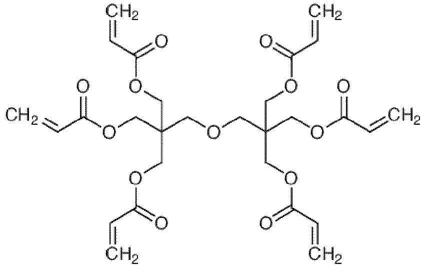

A content (e.g., amount) of the DPHA included in the precursor composition for forming a gel electrolyte was 2 wt% with respect to the total weight of the precursor composition for forming a gel electrolyte, and a content (e.g., amount) of the t-amyl peroxide was 0.02 wt% with respect to the total weight of the precursor composition for forming a gel electrolyte.

The prepared precursor composition for forming a gel electrolyte was impregnated into a polyethylene (PE) separator and then thermally crosslinked in an oven at a temperature of 70 °C for 1 hour and 30 minutes to prepare a gel polymer electrolyte.

### Preparation Example 2: DEC/FEC (2:1)+LiDFOB+LiBF₄+DPHA 3 wt%

A precursor composition for forming a gel polymer electrolyte and a gel polymer electrolyte were prepared in substantially the same manner as in Preparation Example 1, except that a content (e.g., amount) of DPHA was changed to 3 wt%.

### Preparation Example 3: DEC/FEC (2:1)+LiDFOB+LiBF₄+DPHA 4 wt%

A precursor composition for forming a gel polymer electrolyte and a gel polymer electrolyte were prepared in substantially the same manner as in Preparation Example 1, except that a content (e.g., amount) of DPHA was changed to 4 wt%.

### Preparation Example 4: DEC/FEC (9:1)+LiDFOB+LiBF₄+DPHA 2 wt%

A precursor composition for forming a gel polymer electrolyte and a gel polymer electrolyte were prepared in substantially the same manner as in Preparation Example 1, except that a mixing volume ratio of DEC to FEC was changed from 2:1 to 9:1.

### Preparation Example 5: DEC/FEC (2:1)+LiDFOB+LiBF₄+PETA 2 wt%

A precursor composition for forming a gel polymer electrolyte and a gel polymer electrolyte were prepared in substantially the same manner as in Preparation Example 1, except that PETA represented by Formula 14 was used instead of DPHA.

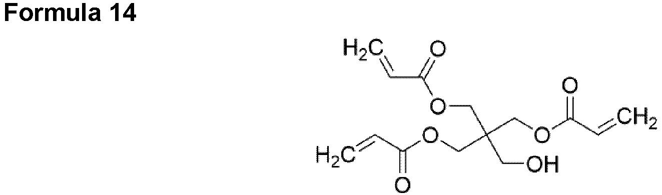

### Preparation Example 6: DEC/FEC (2:1)+LiDFOB+LiBF₄+PETTA 2 wt%

A precursor composition for forming a gel polymer electrolyte and a gel polymer electrolyte were prepared in substantially the same manner as in Preparation Example 1, except that PETTA represented by Formula 15 was used instead of DPHA.

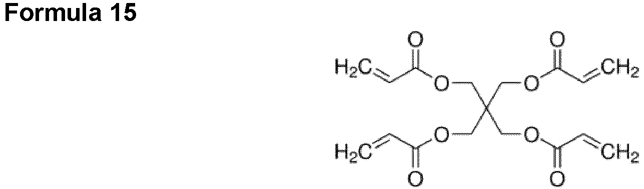

### Preparation Example 7: DEC/FEC (2:1)+LiDFOB+LiBF₄+TriPEA 2 wt%

A precursor composition for forming a gel polymer electrolyte and a gel polymer electrolyte were prepared in substantially the same manner as in Preparation Example 1, except that tripentaerythritol acrylate (TriPEA, Viscoat #802) represented by Formula 16 was used instead of DPHA.

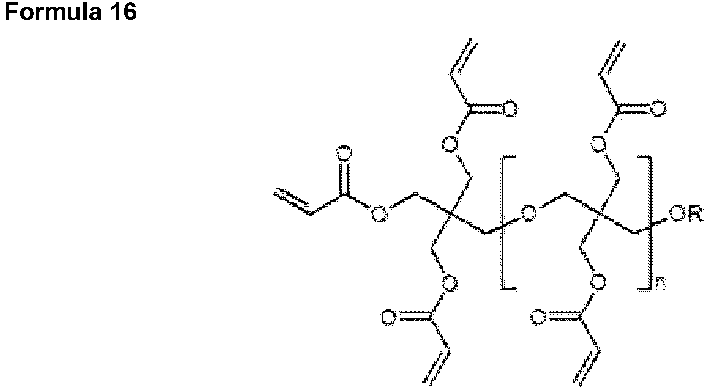

In the preceding formula, R is hydrogen or-C(=O)-CH=CH₂, n is in a range of 1 to 3, a content (e.g., amount) of n=1 is in a range of 10 % to 20 %, a content (e.g., amount) of n=2 is in a range of 55 % to 65 %, and a content (e.g., amount) of n=3 is in a range of 5 % to 15 %.

### Preparation Example 8: DEC/FEC (2:1)+LiDFOB+LiBF₄+DPHA 10 wt%

A precursor composition for forming a gel polymer electrolyte and a gel polymer electrolyte were prepared in substantially the same manner as in Preparation Example 1, except that a content (e.g., amount) of DPHA was changed to 10 wt%.

### Comparative Preparation Example 1: DEC/FEC (2:1)+LiDFOB+LiBF₄+DPHA 0 wt%

A precursor composition for forming an electrolyte was prepared in substantially the same manner as in Preparation Example 1, except that DPHA and a thermal crosslinking agent were not added. The prepared composition is a liquid electrolyte.

The prepared precursor composition for forming a gel electrolyte was impregnated into a PE separator to prepare a liquid electrolyte.

### Comparative Preparation Example 1: DEC/FEC (2:1)+LiDFOB+LiBF₄+NPGDA 2 wt%

A precursor composition for forming a gel polymer electrolyte and a gel polymer electrolyte were each prepared in substantially the same manner as in Preparation Example 1, except that neopentyl glycol diacrylate (NPGDA) represented by Formula 17 was used instead of DPHA.

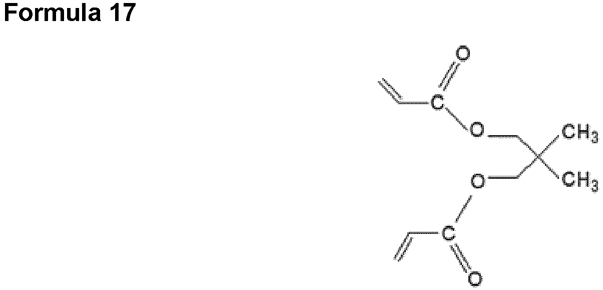

### Comparative Preparation Example 3: DEC/FEC (2:1)+LiBF₄+DPHA 2 wt%

A precursor composition for forming a gel polymer electrolyte and a gel polymer electrolyte were prepared in substantially the same manner as in Preparation Example 1, except that LiDFOB was omitted and 1.2 M LiBF₄ was used alone.

### Comparative Preparation Example 4: DEC/FEC (2:1)+LiDFOB+DPHA 2 wt%

A precursor composition for forming a gel polymer electrolyte and a gel polymer electrolyte were prepared in substantially the same manner as in Preparation Example 1, except that LiBF₄ was omitted and only 1.2 M LiDFOB was used alone.

### Comparative Preparation Example 5: DEC/FEC (2:1)+LiPF₆+DPHA 2 wt%

A precursor composition for forming a gel polymer electrolyte and a gel polymer electrolyte were prepared in substantially the same manner as in Preparation Example 1, except that 1.2 M LiPF₆ was used alone instead of LiBF₄ and LiDFOB.

### Comparative Preparation Example 6: DEC/FEC (3:0)+LiDFOB+LiBF₄+DPHA 2 wt%

A precursor composition for forming a gel polymer electrolyte and a gel polymer electrolyte were prepared in substantially the same manner as in Preparation Example 1, except that FEC was omitted and only DEC was used alone as an organic solvent.

### Comparative Preparation Example 7: DEC/FEC (0:3)+LiDFOB+LiBF₄+DPHA 2 wt%

A precursor composition for forming a gel polymer electrolyte and a gel polymer electrolyte were prepared in substantially the same manner as in Preparation Example 1, except that DEC was omitted and only FEC was used alone as an organic solvent.

### Lithium battery

### Example 1

### Preparation of anode current collector

Copper foil with a thickness of 10 micrometer (µm) was used as an anode current collector.

### Preparation of cathode

A LiNi_{0.8}Co_{0.15}Al_{0.05}O₂ (NCA) powder and a carbon conductive material (Super-P manufactured by Timcal Ltd.) were uniformly (e.g., substantially uniformly) mixed at a weight ratio of 90:5, a PVDF binder solution was added thereto to prepare a cathode active material slurry such that a weight ratio of active material:carbon-based conductive material:binder was 90:5:5.

The prepared slurry was applied onto an aluminum substrate with a thickness of 20 µm by using a doctor blade, dried under reduced pressure at a temperature of 120 °C, and then rolled by using a roll press to prepare a cathode having the form of a sheet. A thickness of a cathode active material layer was 80 µm.

### Manufacturing of lithium battery

A PE separator was arranged between the prepared cathode and the anode current collector to prepare a stack. The precursor composition for forming a gel polymer electrolyte prepared in Preparation Example 1 was injected into the prepared stack and then thermally crosslinked in an oven at a temperature of 70 °C for 1 hour and 30 minutes to manufacture a lithium battery including the gel polymer electrolyte.

The lithium battery had a cathode/gel polymer electrolyte (separator)/anode current collector structure.

### Examples 2 to 8

Lithium batteries were manufactured in substantially the same manner as in Example 1, except that the precursor compositions for forming a gel electrolyte prepared in Preparation Examples 2 to 8 were respectively used instead of the precursor composition for forming a gel electrolyte prepared in Preparation Example 1.

### Comparative Examples 1 to 7

Lithium batteries were manufactured in substantially the same manner as in Example 1, except that the precursor compositions for forming a gel electrolyte prepared in Comparative Preparation Examples 1 to 7 were respectively used instead of the precursor composition for forming a gel electrolyte prepared in Preparation Example 1. The lithium battery of Comparative Example 1 including the liquid electrolyte of Comparative Preparation Example 1 was manufactured without thermal crosslinking.

### Evaluation Example 1: Measurement of ionic conductivity of gel polymer electrolyte

For the electrolytes prepared in Preparation Examples 1 to 8 and Comparative Preparation Examples 1 to 7, ion conductivity (σ) and a lithium ion transference number (t⁺) at a temperature of 25 °C were measured by using a lithium symmetric cell and an impedance analyzer (Solartron 1260A Impedance/Gain-Phase Analyzer coupled with Solartron 1287 Electrochemical Interface). The ion conductivity and the lithium ion transference number were derived by using an AC impedance method combined with a steady-state current method. First, an initial lithium interface resistance (Ro) was measured from an impedance spectrum in a frequency range of 0.1 hertz (Hz) to 100 kilohertz (kHz), and subsequently, a small direct current voltage (less than 10 millivolt (mV)) was applied until a steady-state current (Iss) was obtained (time > 3,000 seconds). Then, finally, a steady-state lithium interfacial resistance (Rss) was measured from the impedance spectrum in a frequency range of 0.1 Hz to 100 kHz. The lithium ion transference number (t⁺) was derived by using parameters obtained from an impedance response and a steady-state current response.

The lithium symmetric cell had a Li/electrolyte/Li structure in which a cathode electrolyte film was arranged between lithium electrodes and was sealed in a cell. Some of measurement results are shown in Table 1.

**Table 1**

| | Ion conductivity [mS/cm] | Lithium ion transference number |
|---|---|---|
| Comparative Preparation Example 1: DEC/FEC (2:1)+LiDFOB+LiBF₄+DPHA 0 wt% | 0.32 | 0.28 |
| Preparation Example 1: DEC/FEC (2:1)+LiDFOB+LiBF₄+DPHA 2 wt% | 0.26 | 0.31 |
| Preparation Example 2: DEC/FEC (2:1)+LiDFOB+LiBF₄+DPHA 3 wt% | 0.21 | 0.32 |
| Preparation Example 3: DEC/FEC (2:1)+LiDFOB+LiBF₄+DPHA 4 wt% | 0.19 | 0.34 |

As shown in Table 1, the ionic conductivity of the gel polymer electrolytes of Preparation Examples 1 to 3 was 50 % or more of the ionic conductivity of the liquid electrolyte of Comparative Preparation Example 1. The gel polymer electrolytes of Preparation Examples 1 to 3 provided ionic conductivity in a range similar to that of the liquid electrolyte of Comparative Preparation Example 1.

The ionic conductivity of the gel polymer electrolytes of each of Preparation Examples 7 and 8 were lower than the ionic conductivity of the gel polymer electrolytes of Preparation Examples 1 to 3. This was determined because, in the gel polymer electrolytes of Preparation Examples 7 and 8, a crosslink density increased and fluidity decreased as compared with the gel polymer electrolytes of Preparation Examples 1 to 3.

### Evaluation Example 2: Charge/discharge test

A high temperature (45 °C) charge/discharge test was performed on the lithium batteries of Examples 1 to 8 and Comparative Examples 1 to 7 under the following conditions.

The lithium batteries were charged at a constant current rate of 0.2 C at a temperature of 45 °C until a voltage reached 4.3 V (vs. Li). Subsequently, the lithium batteries were discharged at a constant current rate of 0.5 C until the voltage reached 3.6 V (vs. Li) during discharging.

Such a charging/discharging cycle was repeated 160 times.

The lithium battery was rested for 5 minutes after every charging/discharging cycle. Some of charge/discharge test results at high temperature are shown in Table 2. A capacity retention ratio is defined by Equation 1. capacity retention ratio (%) = [discharge capacity at 160th cycle/discharge capacity at 1st cycle] × 100

**Table 2**

| | Capacity retention ratio [%] |
|---|---|
| Example 1: DEC/FEC (2:1)+LiDFOB+LiBF₄+DPHA 2 wt% | 67.0 |
| Example 2: DEC/FEC (2:1)+LiDFOB+LiBF₄+DPHA 3 wt% | 67.1 |
| Example 3: DEC/FEC (2:1)+LiDFOB+LiBF₄+DPHA 4 wt% | 72.4 |
| Example 4: DEC/FEC (9:1)+LiDFOB+LiBF₄+DPHA 2 wt% | 60.0 |
| Example 5: DEC/FEC (2:1)+LiDFOB+LiBF₄+PETA 2 wt% | 63.4 |
| Example 6: DEC/FEC (2:1)+LiDFOB+LiBF₄+PETTA 2 wt% | 66.2 |
| Example 7: DEC/FEC (2:1)+LiDFOB+LiBF₄+TriPEA 2 wt% | 66.8 |
| Example 8: DEC/FEC (2:1)+LiDFOB+LiBF₄+DPHA 10 wt% | 65.5 |
| Comparative Example 1: DEC/FEC (2:1)+LiDFOB+LiBF₄+DPHA 0 wt% | 49.1 |
| Comparative Example 2: DEC/FEC (2:1)+LiDFOB+LiBF₄+NPGDA 2 wt% | 52.6 |
| Comparative Example 3: DEC/FEC (2:1)+LiBF₄+DPHA 2 wt% | 58.2 |
| Comparative Example 4: DEC/FEC (2:1)+LiDFOB+DPHA 2 wt% | 59.1 |
| Comparative Example 5: DEC/FEC (2:1)+LiPF₆+DPHA 2 wt% | 42.7 |
| Comparative Example 6: DEC/FEC (3:0)+LiDFOB+LiBF₄+DPHA 2 wt% | 53.0 |
| Comparative Example 7: DEC/FEC (0:3)+LiDFOB+LiBF₄+DPHA 2 wt% | 56.4 |

As shown in Table 2, the lifespan characteristics of the lithium batteries of Examples 1 to 8 were improved as compared with the lithium batteries of Comparative Examples 1 to 7.

The lifespan characteristics of the lithium batteries of Examples 1 to 6 having three or more crosslinking groups were improved as compared with the lithium battery of Comparative Example 2 having two crosslinking groups.

For example, the lifespan characteristics of the lithium batteries of Examples 1 to 3 each including the gel polymer electrolyte were improved as compared with the lithium battery of Comparative Example 1 including the liquid electrolyte.

### Evaluation Example 3: Confirmation of surface and cross section of lithium metal layer

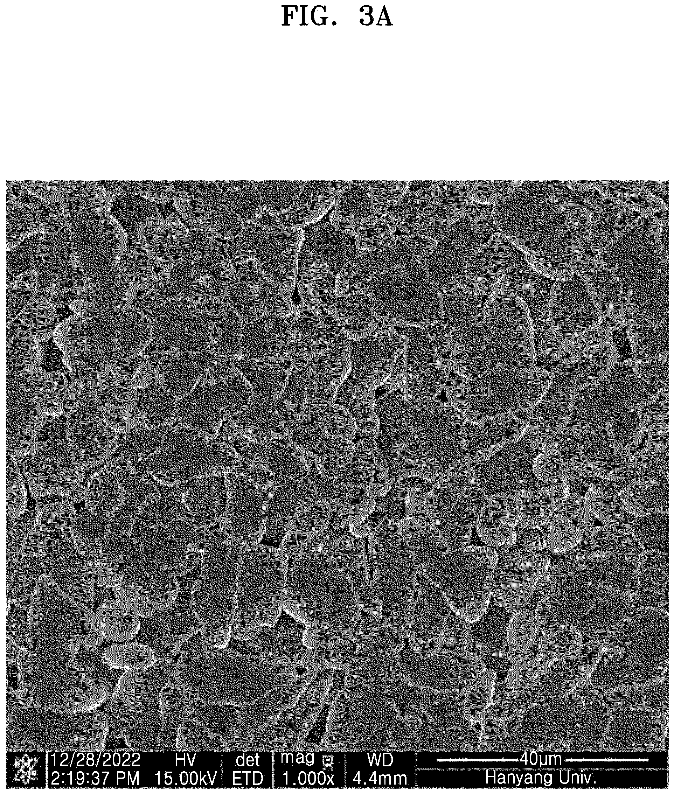

In the lithium batteries manufactured in Example 3 and Comparative Example 1, scanning electron microscope images of a surface and a cross-section of a lithium metal layer formed after a 1^{st} cycle of charging and scanning electron microscope images of a surface and a cross-section of a lithium metal layer formed after a 60^{th} cycle of charging are shown in FIGs. 3A to 6B.

FIG. 3A shows the scanning electron microscope image of the surface of the lithium metal layer formed after the 1^{st} cycle of charging, in the lithium battery of Example 3.

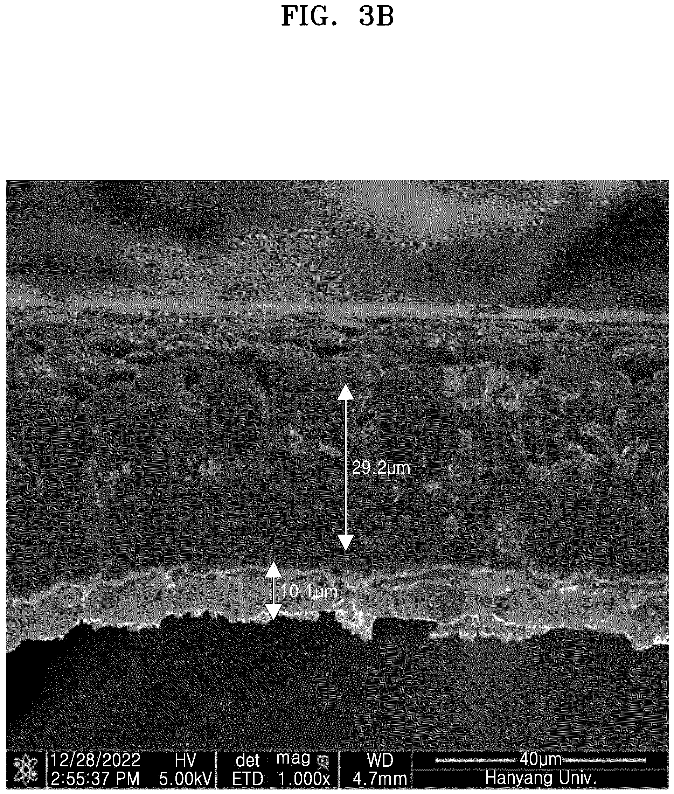

FIG. 3B shows the scanning electron microscope image of the cross section of the lithium metal layer formed after the 1^{st} cycle of charging, in the lithium battery of Example 3.

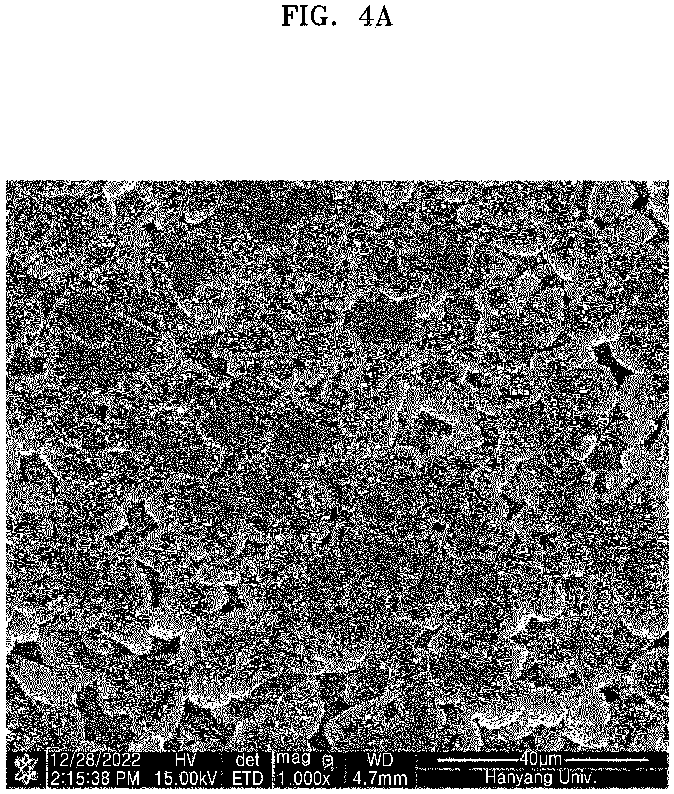

FIG. 4A shows the scanning electron microscope image of the surface of the lithium metal layer formed after the 1^{st} cycle of charging, in the lithium battery of Comparative Example 1.

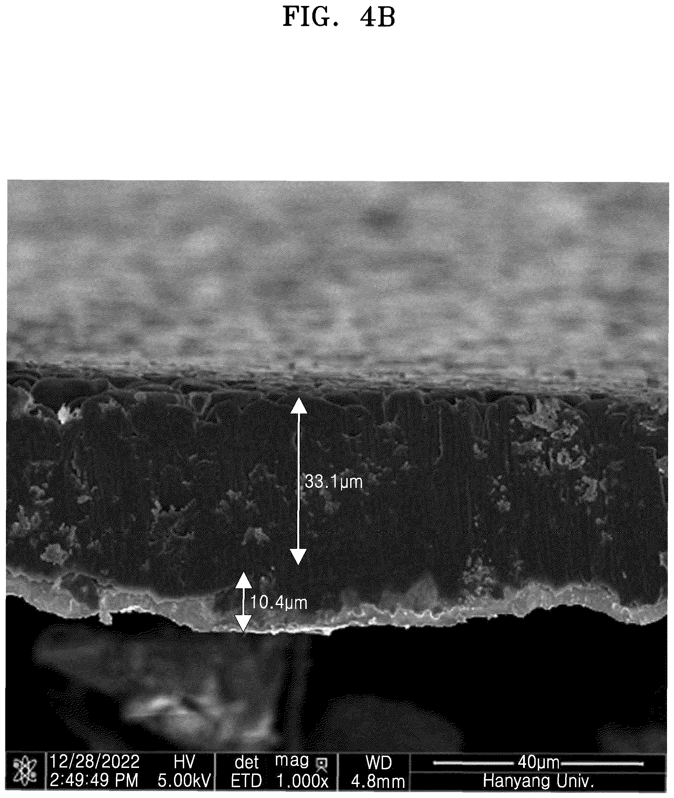

FIG. 4B shows the scanning electron microscope image of the cross section of the lithium metal layer formed after the 1^{st} cycle of charging, in the lithium battery of Comparative Example 1.

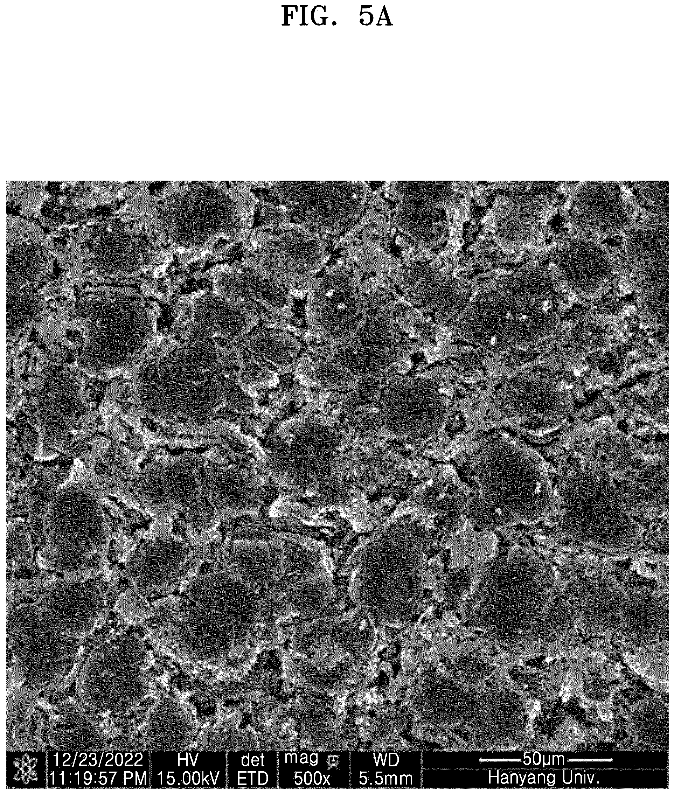

FIG. 5A shows the scanning electron microscope image of the surface of the lithium metal layer formed after the 60^{th} cycle of charging, in the lithium battery of Example 3.

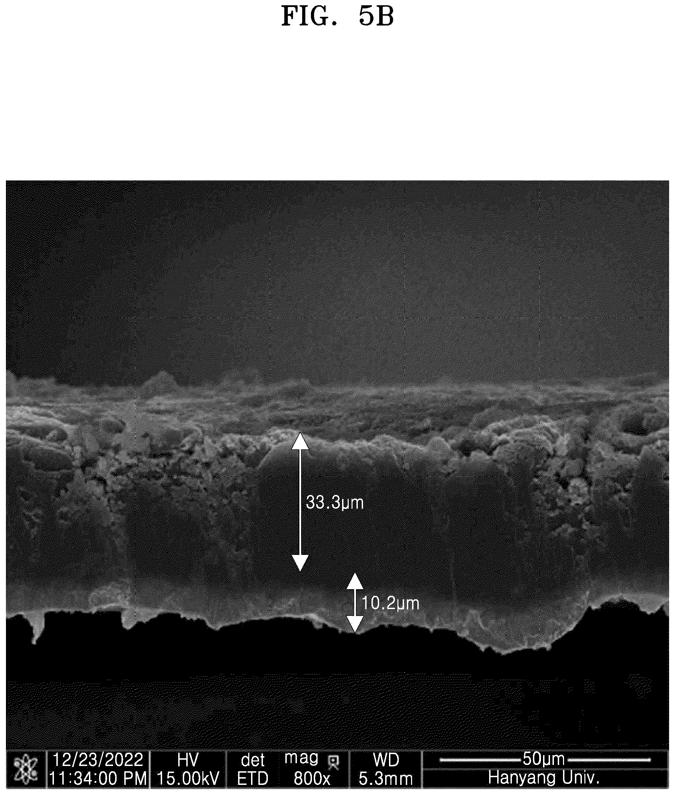

FIG. 5B shows the scanning electron microscope image of the cross section of the lithium metal layer formed after the 60^{th} cycle of charging, in the lithium battery of Example 3.

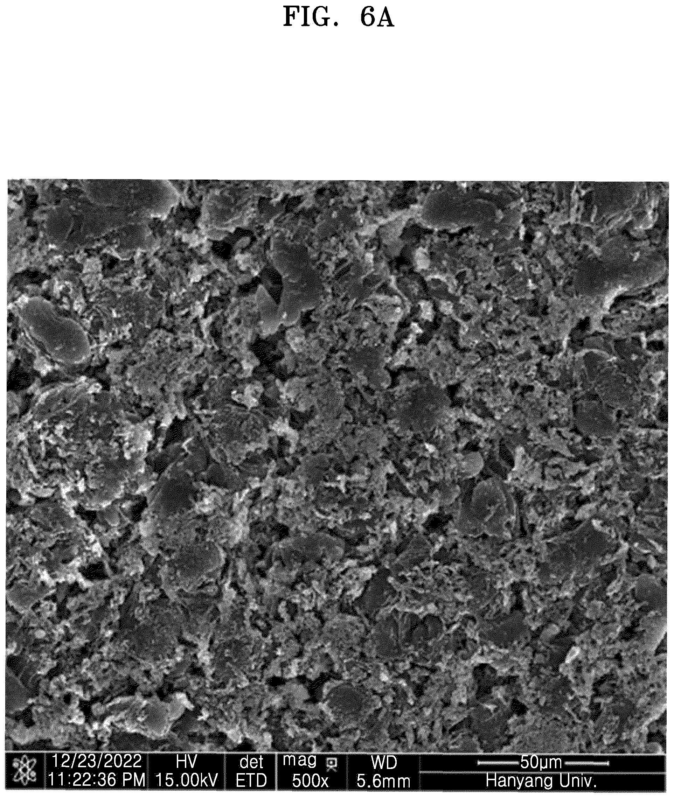

FIG. 6A shows the scanning electron microscope image of the surface of the lithium metal layer formed after the 60^{th} cycle of charging, in the lithium battery of Comparative Example 1.

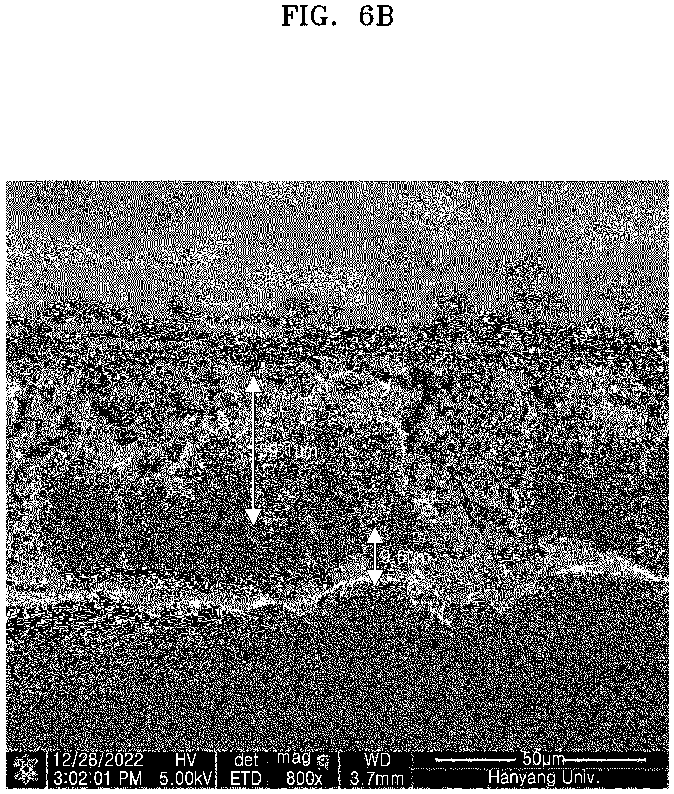

FIG. 6B is the scanning electron microscope image of the cross section of the lithium metal layer formed after the 60^{th} cycle of charging in the lithium battery of Comparative Example 1.

As shown in FIGs. 3A and 4A, it was confirmed that, after the 1^{st} cycle of charging, the surface of the lithium metal layer precipitated in the lithium battery of Example 3 has reduced pores and was denser than the surface of the lithium metal layer precipitated in the lithium battery of Comparative Example 1.

As shown in FIGs. 3B and 4B, after the 1^{st} cycle of charging, a thickness of the lithium metal layer formed in the lithium battery of Example 3 was 29.2 µm, which was reduced by 10 % or more as compared with a thickness of 33.1 µm of the lithium metal layer formed in the lithium battery of Comparative Example 1.

As shown in FIGs. 5A and 6A, it was confirmed that, after the 60^{th} cycle of charging, the surface of the lithium metal layer precipitated in the lithium battery of Example 3 has reduced pores and was denser than the surface of the lithium metal layer precipitated in the lithium battery of Comparative Example 1.

As shown in FIGs. 5B and 6B, after the 60^{th} cycle of charging, a thickness of the lithium metal layer formed in the lithium battery of Example 3 was 33.3 µm, which was reduced by about 15 % or more as compared with a thickness of 39.1 µm of the lithium metal layer formed in the lithium battery of Comparative Example 1.

It was confirmed that, due to the lithium battery of Example 3 including the gel polymer electrolyte with improved mechanical properties, as compared with the lithium battery of Comparative Example 1 including the liquid electrolyte, the density of the lithium metal layer precipitated during a charging process was increased, and also a change in thickness of the lithium battery, for example, a change in volume of the lithium battery, was reduced.

### Evaluation Example 4: XPS spectrum evaluation

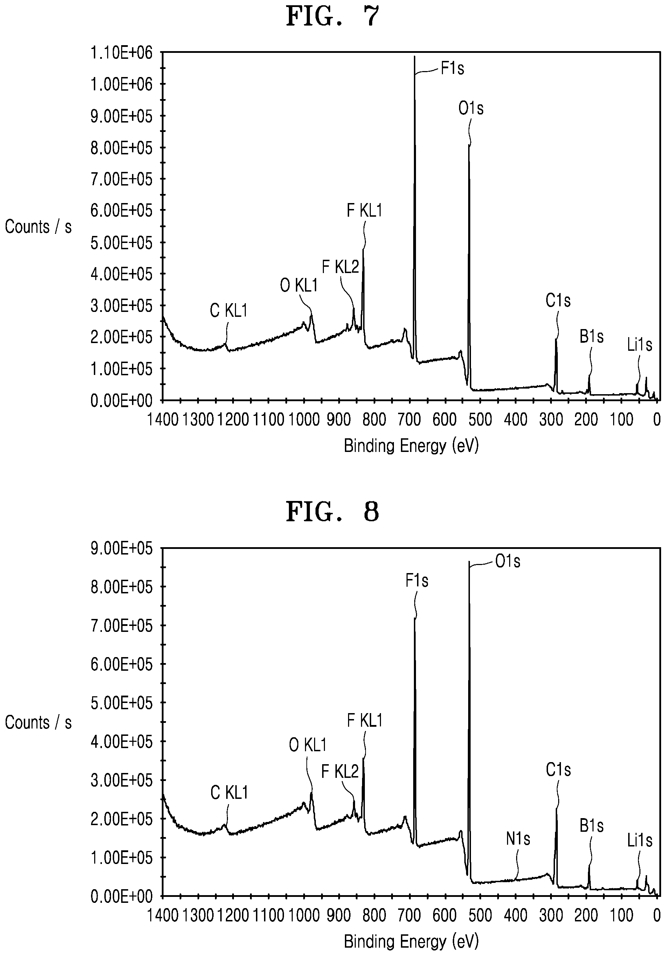

After the lithium batteries manufactured in Example 3 and Comparative Example 1 were charged up to a 20^{th} cycle under the charging or discharging conditions of Evaluation Example 3, the lithium batteries were disassembled to measure an XPS spectrum on the surface of the lithium metal layer. Results thereof are shown in FIGs. 7A and 7B. XPS spectra for an oxygen (O) 1s orbital and a fluorine (F) 1s orbital were measured by using Quantum 2000 (manufactured by Physical Electronics. Inc.).

FIG. 7 shows the XPS spectrum of the surface of the lithium metal layer after the 20^{th} cycle in the lithium battery manufactured in Example 3. A peak due to the fluorine (F) 1s orbital was greater than a peak due to the oxygen (O) 1s orbital.

FIG. 8 shows the XPS spectrum of the surface of the lithium metal layer after the 20^{th} cycle in the lithium battery manufactured in Comparative Example 1. A peak due to the fluorine (F) 1s orbital was less than a peak due to the oxygen (O) 1s orbital.

As shown in FIG. 7, in the lithium battery of Example 3, on the surface of the lithium metal layer, a content (e.g., amount) of fluorine was higher than a content (e.g., amount) of the oxygen (O).

As shown in FIG. 8, in the lithium battery of Comparative Example 1, on the surface of the lithium metal layer, a content (e.g., amount) of fluorine was lower than a content (e.g., amount) of the oxygen (O).

In the lithium battery of Example 3, it was determined that the content (e.g., amount) of fluorine (F) was high because an SEI layer on the surface of the lithium metal layer mainly included an inorganic material which was a decomposition product of lithium salt anions.

In the lithium battery of Comparative Example 1, it was determined that the content (e.g., amount) of oxygen (O) was high because an SEI layer on the surface of the lithium metal layer mainly included an organic material which was a decomposition product of an organic solvent.

### Evaluation Example 4: IR spectrum evaluation

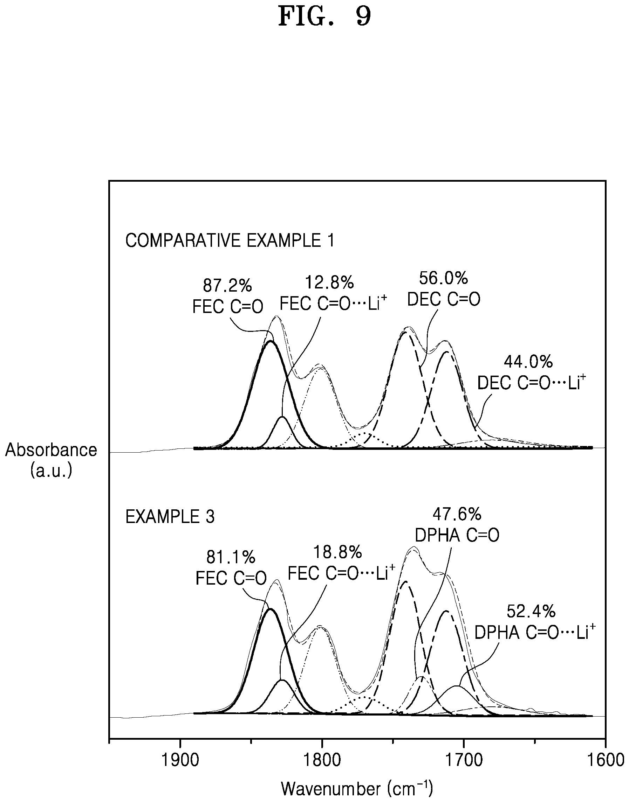

Infrared spectra were measured on the gel polymer electrolyte of Example 3 and the liquid electrolyte of Comparative Example 1. Results thereof are shown in FIG. 9.

In FIG. 9, the upper part shows the infrared spectrum of the liquid electrolyte of Comparative Example 1, and the lower part shows the infrared spectrum of the gel polymer electrolyte of Example 3.

As shown in FIG. 9, in the gel polymer electrolyte of Example 3, it was confirmed that a peak due to an interaction between an ester group of a first polymer and a lithium cation (for example, DPHA C=O...Li⁺) was obtained.

In one or more embodiments, it was confirmed that, due to the interaction between the ester group of the gel polymer electrolyte of Example 3 and the lithium cation, a solvation structure of lithium could be changed unlike the liquid electrolyte.

### Evaluation Example 4: Raman spectrum evaluation

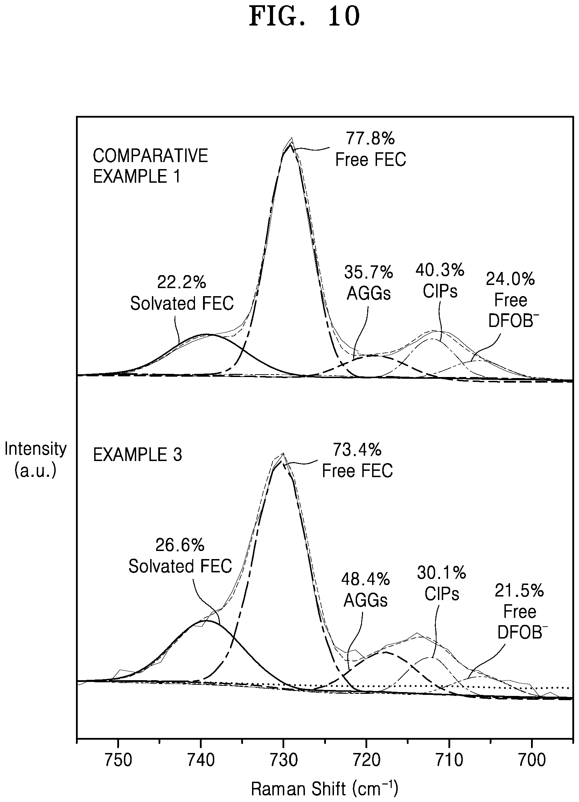

Raman spectra were measured on the gel polymer electrolyte of Example 3 and the liquid electrolyte of Comparative Example 1. Results thereof are shown in FIG. 10.

In FIG. 10, the upper part shows the Raman spectrum of the liquid electrolyte of Comparative Example 1, and the lower part shows the Raman spectrum of the gel polymer electrolyte of Example 3.

As shown in FIG. 10, an area of a peak (for example, AGGs) due to aggregation of lithium salt anions in the gel polymer electrolyte of Example 3 was 48.4 %, and an area of a peak (for example, AGGs) due to aggregation of lithium salt anions in the liquid electrolyte of Comparative Example 1 was 35.7 %. It was confirmed that the aggregation of anions in the gel polymer electrolyte of Example 3 increased as compared with the liquid electrolyte of Comparative Example 1.

Due to the increase in aggregation of anions in the gel polymer electrolyte of Example 3, the relative charge of the aggregated (e.g., agglomerated) anions changes, thereby increasing an anion concentration in an electric double layer. It was confirmed that the increased anions could change a composition of an SEI layer by participating in the formation of an SEI layer during a charging or discharging process.

In one or more embodiments, in the lithium battery including the gel polymer electrolyte of Example 3, an SEI layer with improved structural stability may be formed during a charging or discharging process as compared with the lithium battery including the liquid electrolyte of Comparative Example 1, and thus the cycle characteristics of the lithium battery of Example 3 may be improved.

While embodiments have been described in more detail with reference to the accompanying drawings, the present disclosure is not limited to one or more embodiments. It is obvious to those skilled in the art to which the present disclosure belongs that one or more suitable changes and modifications are conceivable within the scope of the technical idea described in the claims, and those are understood as naturally belonging to the technical scope of the present disclosure.

According to an aspect, there may be provided a lithium battery in which a novel (e.g., new) gel polymer electrolyte with excellent or suitable ionic conductivity is provided to suppress or reduce a change in volume during charging or discharging and improve cycle characteristics.

A battery management system (BMS) device, and/or any other relevant devices or components according to embodiments of the present disclosure described herein may be implemented utilizing any suitable hardware, firmware (e.g., an application-specific integrated circuit), software, or a combination of software, firmware, and hardware. For example, the components of the device may be formed on one integrated circuit (IC) chip or on separate IC chips. Further, the components of the device may be implemented on a flexible printed circuit film, a tape carrier package (TCP), a printed circuit board (PCB), or formed on one substrate. Further, the components of the device may be a process or thread, running on one or more processors, in one or more computing devices, executing computer program instructions and interacting with other system components for performing the functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, and/or the like. Also, a person of skill in the art should recognize that the functionality of computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in one or more embodiments. While one or more embodiments have been described with reference to the drawings, it will be understood by those of ordinary skill in the art that one or more suitable changes in form and details may be made therein without departing from the spirit and scope of the present disclosure as defined by the following claims and equivalents thereof.

Embodiments are set out in the following clauses:
Clause 1. A lithium battery comprising:
   a cathode;
   an anode current collector; and
   an electrolyte layer disposed between the cathode and the anode current collector,
   wherein the electrolyte layer comprises a gel polymer electrolyte,
   wherein the gel polymer electrolyte comprises a first polymer, a first lithium salt, a second lithium salt, a first organic solvent, and a second organic solvent,
   the first polymer comprises a repeating unit derived from a first crosslinking monomer comprising three or more reactive functional groups, and
   the first lithium salt and the second lithium salt each independently comprise a borate-based lithium salt.
Clause 2. The lithium battery of clause 1, wherein the first crosslinking monomer comprises an ester group and is an acrylic monomer,
   the acrylic monomer comprises trimethylolpropane triacrylate, trimethylolpropane trimethacrylate, trimethylolpropane ethoxylate triacrylate, trimethylolpropane propoxylate triacrylate, ditrimethylolpropane tetraacrylate, pentaerythritol triacrylate, pentaerythritol tetraacrylate, pentaerythritol ethoxylate tetraacrylate, dipentaerythritol pentaacrylate, dipentaerythritol hexaacrylate, or a combination thereof, and
   the first polymer is a crosslinked product of the first crosslinking monomer.
Clause 3. The lithium battery of clause 1 or clause 2, wherein a content of the first polymer is in a range of about 0.1 wt% to about 10 wt% of a total weight of the gel polymer electrolyte.
Clause 4. The lithium battery of clauses 1 to 3, wherein the first lithium salt and the second lithium salt each independently comprise a fluorine-containing borate-based lithium salt,
   wherein the fluorine-containing borate-based lithium salt comprises LiBF₄, LiBF₃(C₂F₅), a compound selected from compounds represented by Formulas 1 to 12 below, or a combination thereof: 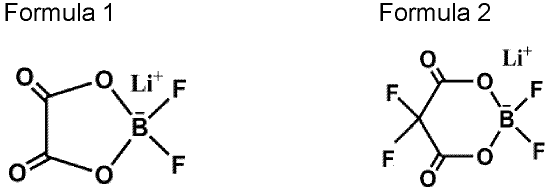 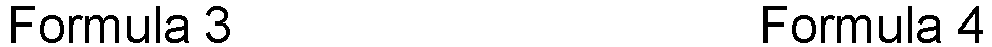 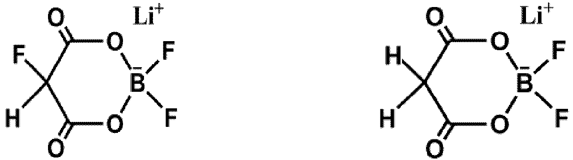 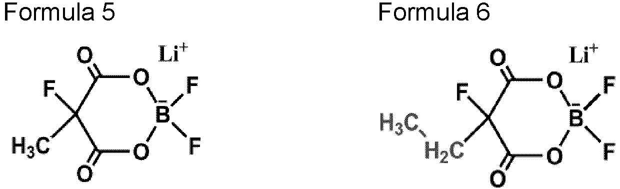 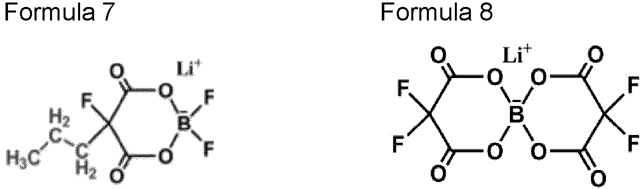 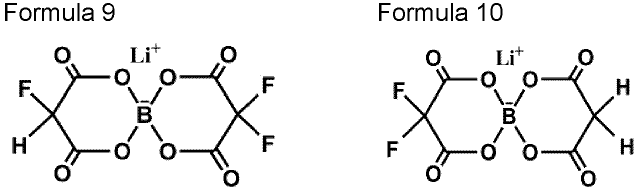 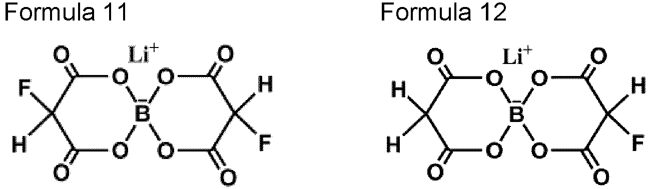
Clause 5. The lithium battery of clauses 1 to 4, wherein the first lithium salt comprises LiBF₄,
   the second lithium salt comprises a compound selected from compounds represented by Formulas 1 to 12, and
   the gel polymer electrolyte is free of a phosphorous-based lithium salt.
Clause 6. The lithium battery of clauses 1 to 5, wherein a content of each of the first lithium salt and the second lithium salt is more than 0 and up to about 1.2 M, and
   a content ratio of the first lithium salt to the second lithium salt is in a range of about 1:9 to about 9:1.
Clause 7. The lithium battery of clauses 1 to 6, wherein the first organic solvent and the second organic solvent each comprise a carbonate-based compound,
   the first organic solvent comprises a linear carbonate compound, and
   the second organic solvent comprises a cyclic carbonate compound substituted with a substituent,
   wherein the substituent comprises a halogen, a cyano group (CN), a nitro group (NO₂), or a combination thereof.
Clause 8. The lithium battery of clauses 1 to 7, wherein the first organic solvent comprises diethyl carbonate (DEC), dimethyl carbonate (DMC), ethyl methyl carbonate (EMC), methyl propyl carbonate, ethyl propyl carbonate, dipropyl carbonate, or a combination thereof.
Clause 9. The lithium battery of clauses 1 to 8, wherein the second organic solvent comprises: vinylene carbonate substituted with at least one substituent selected from a halogen, a cyano group (CN), and a nitro group (NO₂); vinylethylene carbonate substituted with at least one substituent selected from a halogen, a cyano group (CN), and a nitro group (NO₂); fluoroethylene carbonate (FEC); FEC substituted with at least one substituent selected from a halogen, a cyano group (CN), and a nitro group (NO₂); or a combination thereof.
Clause 10. The lithium battery of clauses 1 to 9, wherein the first organic solvent comprises diethyl carbonate,
   the second organic solvent comprises a fluorine-substituted cyclic carbonate compound, and
   the gel polymer electrolyte is free of an unsubstituted cyclic carbonate compound.
Clause 11. The lithium battery of clauses 1 to 10, wherein a volume ratio of the first organic solvent to the second organic solvent is in a range of about 5.5:4.5 to about 9:1.
Clause 12. The lithium battery of clauses 1 to 11, wherein the gel polymer electrolyte is free of butanediol, thiourea, or a combination thereof.
Clause 13. The lithium battery of clauses 1 to 12, wherein the gel polymer electrolyte is a crosslinked product of a precursor composition,
   wherein a content of the first crosslinking monomer is in a range of about 0.1 wt% to about 10 wt% of a total weight of the precursor composition,
   the precursor composition comprises a thermal initiator,
   the thermal initiator is a t-amyl peroxide-based or azobis-based thermal initiator, and
   the crosslinked product is a result of heat treatment at a temperature of about 60 °C to about 90 °C for about 1 hour to about 3 hours.
Clause 14. The lithium battery of clauses 1 to 13, wherein an ionic conductivity of the gel polymer electrolyte at a temperature of 25 °C and a pressure of 1 atm is 50 % or more of an ionic conductivity of a liquid electrolyte excluding the first polymer at a temperature of 25 °C and a pressure of 1 atm.
Clause 15. The lithium battery of clauses 1 to 14, wherein the gel polymer electrolyte has an ionic conductivity of 0.10 mS/cm or more at a temperature of 25 °C and a pressure of 1 atm.
Clause 16. The lithium battery of clauses 1 to 15, wherein a lithium ion transference number (t_{Li⁺}) of the gel polymer electrolyte at a temperature of 25 °C and a pressure of 1 atm is greater than a lithium ion transference number of a liquid electrolyte excluding the first polymer at a temperature of 25 °C and a pressure of 1 atm.
Clause 17. The lithium battery of clauses 1 to 16, wherein the gel polymer electrolyte has a lithium transference number of 0.30 or more at a temperature of 25 °C and a pressure of 1 atm.
Clause 18. The lithium battery of clauses 1 to 17, wherein the electrolyte layer further comprises a porous substrate,
   wherein the porous substrate is a porous membrane,
   the porous membrane is woven or nonwoven fabric, and
   the porous substrate comprises olefin-based resin, fluorine-based resin, ester-based resin, imide-based resin, acrylic resin, cellulose-based resin, or a combination thereof,
   wherein the olefin resin comprises polyethylene, polypropylene, or a combination thereof,
   the fluorine-based resin comprises polyvinylidene fluoride, polytetrafluoroethylene, or a combination thereof,
   the ester-based resin comprises polyethylene terephthalate, polybutylene terephthalate, or a combination thereof,
   the imide-based resin comprises polyamidoimide, polyetherimide, or a combination thereof,
   the acrylic resin comprises polyacrylonitrile, polyacrylate, or a combination thereof, and
   the cellulose-based resin comprises carboxymethylcellulose, microbial cellulose, plant cellulose, animal cellulose, or a combination thereof.
Clause 19. The lithium battery of clauses 1 to 18, wherein the anode current collector comprises copper (Cu), nickel (Ni), nickel-coated copper, stainless steel (SUS), iron (Fe), cobalt (Co), or an alloy thereof.
Clause 20. The lithium battery of clauses 1 to 19, further comprising a lithium metal layer between the electrolyte layer and the anode current collector,
   wherein, in X-ray photoelectron spectroscopy (XPS) analysis of a surface of the lithium metal layer, an intensity of a fluorine peak is greater than an intensity of an oxygen peak.

## Claims

1. A lithium battery (1) comprising:
a cathode (10);
an anode current collector (21); and
an electrolyte layer (30) between the cathode (10) and the anode current collector (21),
the electrolyte layer (30) comprising a gel polymer electrolyte,
the gel polymer electrolyte comprising a first polymer, a first lithium salt, a second lithium salt, a first organic solvent, and a second organic solvent,
the first polymer comprising a repeating unit derived from a first crosslinking monomer comprising at least three reactive functional groups, and
the first lithium salt and the second lithium salt each independently comprising a borate-based lithium salt.

2. The lithium battery (1) as claimed in claim 1, wherein the first crosslinking monomer comprises an ester group and is an acrylic monomer,
the acrylic monomer comprising trimethylolpropane triacrylate,
trimethylolpropane trimethacrylate, trimethylolpropane ethoxylate triacrylate, trimethylolpropane propoxylate triacrylate, ditrimethylolpropane tetraacrylate, pentaerythritol triacrylate, pentaerythritol tetraacrylate, pentaerythritol ethoxylate tetraacrylate, dipentaerythritol pentaacrylate, dipentaerythritol hexaacrylate, or a combination thereof, and
the first polymer is a crosslinked product of the first crosslinking monomer.

3. The lithium battery (1) as claimed in claim 1 or 2, wherein an amount of the first polymer is 0.1 wt% to 10 wt% of a total weight of the gel polymer electrolyte.

4. The lithium battery (1) as claimed in any of claims 1 to 3, wherein the first lithium salt and the second lithium salt each independently comprise a fluorine-containing borate-based lithium salt,
wherein the fluorine-containing borate-based lithium salt comprises LiBF₄, LiBF₃(C₂F₅), a compound selected from among compounds represented by Formula 1 to Formula 12, or a combination thereof:

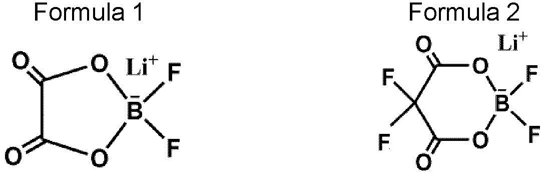

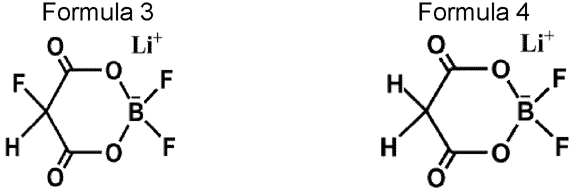

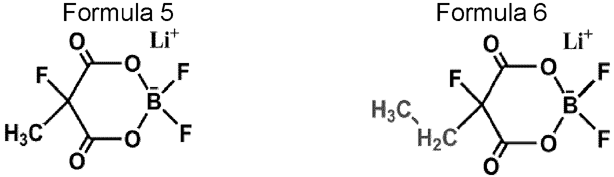

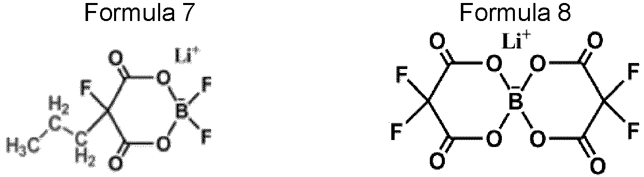

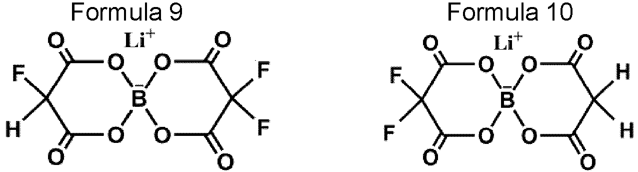

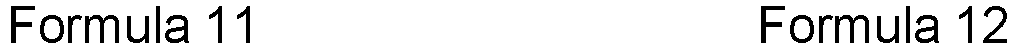

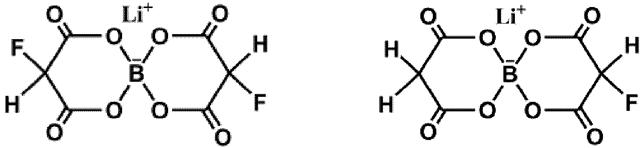

5. The lithium battery (1) as claimed in any of claims 1 to 4, wherein the first lithium salt comprises LiBF₄,
the second lithium salt comprises a compound selected from among compounds represented by Formulas 1 to 12, and
the gel polymer electrolyte excludes a phosphorous-based lithium salt.

6. The lithium battery (1) as claimed in any of claims 1 to 5, wherein an amount of each of the first lithium salt and the second lithium salt is more than 0 and at most 1.2 M, and
an amount ratio of the first lithium salt to the second lithium salt is 1:9 to 9:1.

7. The lithium battery (1) as claimed in any of claims 1 to 6, wherein
- the first organic solvent and the second organic solvent each comprise a carbonate-based compound,
the first organic solvent comprising a linear carbonate compound, and
the second organic solvent comprising a cyclic carbonate compound substituted with a substituent,
wherein the substituent comprises a halogen, a cyano group (CN), a nitro group (NO₂), or a combination thereof; and/or
- the first organic solvent comprises diethyl carbonate (DEC), dimethyl carbonate (DMC), ethyl methyl carbonate (EMC), methyl propyl carbonate, ethyl propyl carbonate, dipropyl carbonate, or a combination thereof; and/or
- the second organic solvent comprises: vinylene carbonate substituted with at least one substituent selected from among a halogen, a cyano group (CN), and a nitro group (NO₂); vinylethylene carbonate substituted with at least one substituent selected from among a halogen, a cyano group (CN), and a nitro group (NO₂); fluoroethylene carbonate (FEC); FEC substituted with at least one substituent selected from among a halogen, a cyano group (CN), and a nitro group (NO₂); or a combination thereof; and/or
- the first organic solvent comprises diethyl carbonate,
the second organic solvent comprises a fluorine-substituted cyclic carbonate compound, and
the gel polymer electrolyte excludes an unsubstituted cyclic carbonate compound.

8. The lithium battery (1) as claimed in any of claims 1 to 7, wherein a volume ratio of the first organic solvent to the second organic solvent is 5.5:4.5 to 9:1.

9. The lithium battery (1) as claimed in any of claims 1 to 8, wherein the gel polymer electrolyte excludes butanediol, thiourea, or a combination thereof.

10. The lithium battery (1) as claimed in any of claims 1 to 9, wherein the gel polymer electrolyte is a crosslinked product of a precursor composition,
an amount of the first crosslinking monomer being 0.1 wt% to 10 wt% of a total weight of the precursor composition,
the precursor composition comprising a thermal initiator,
the thermal initiator being a t-amyl peroxide-based thermal initiator or an azobis-based thermal initiator, and
the crosslinked product being a result of heat treatment at a temperature of 60 °C to 90 °C for 1 hour to 3 hours.

11. The lithium battery (1) as claimed in any of claims 1 to 10, wherein an ionic conductivity of the gel polymer electrolyte at a temperature of 25 °C and a pressure of 1 atmosphere (atm) is at least 50 % of an ionic conductivity of a liquid electrolyte excluding the first polymer at a temperature of 25 °C and a pressure of 1 atm.

12. The lithium battery (1) as claimed in any of claims 1 to 11, wherein the gel polymer electrolyte has an ionic conductivity of at least 0.10 milliseimens per centimeter (mS/cm) at a temperature of 25 °C and a pressure of 1 atm.

13. The lithium battery (1) as claimed in any of claims 1 to 12,
wherein a lithium ion transference number (t_{Li}⁺) of the gel polymer electrolyte at a temperature of 25 °C and a pressure of 1 atm is greater than a lithium ion transference number of a liquid electrolyte excluding the first polymer at a temperature of 25 °C and a pressure of 1 atm; and/or,
wherein the gel polymer electrolyte has a lithium transference number of at least 0.30 at a temperature of 25 °C and a pressure of 1 atm.

14. The lithium battery (1) as claimed in any of claims 1 to 13, wherein the electrolyte layer (30) further comprises a porous substrate,
the porous substrate being a porous membrane,
the porous membrane being a woven fabric or a nonwoven fabric, and
the porous substrate comprising an olefin-based resin, a fluorine-based resin, an ester-based resin, an imide-based resin, an acrylic resin, a cellulose-based resin, or a combination thereof,
the olefin-based resin comprising polyethylene, polypropylene, or a combination thereof,
the fluorine-based resin comprising polyvinylidene fluoride, polytetrafluoroethylene, or a combination thereof,
the ester-based resin comprising polyethylene terephthalate, polybutylene terephthalate, or a combination thereof,
the imide-based resin comprising polyamidoimide, polyetherimide, or a combination thereof,
the acrylic resin comprising polyacrylonitrile, polyacrylate, or a combination thereof, and
the cellulose-based resin comprising carboxymethylcellulose, microbial cellulose, plant cellulose, animal cellulose, or a combination thereof.

15. The lithium battery (1) as claimed in any of claims 1 to 14,
wherein the anode current collector (21) comprises copper (Cu), nickel (Ni), nickel-coated copper, stainless steel (SUS), iron (Fe), cobalt (Co), or alloys thereof, and/or
further comprising a lithium metal layer (22) between the electrolyte layer (30) and the anode current collector (21),
wherein, a X-ray photoelectron spectroscopy (XPS) analysis of a surface of the lithium metal layer (22) has an intensity of a fluorine peak being greater than an intensity of an oxygen peak.
